(19) Europäisches Patentamt
European Patent Office
Office européen des brevets

(11) **EP 2 557 092 B1**

(12) **EUROPEAN PATENT SPECIFICATION**

(45) Date of publication and mention of the grant of the patent:
**17.12.2014 Bulletin 2014/51**

(21) Application number: **12007621.1**

(22) Date of filing: **04.02.2010**

(51) Int Cl.:
$C08F\ 2/00$ (2006.01)    $C08F\ 10/06$ (2006.01)
$C08K\ 3/34$ (2006.01)    $C08L\ 23/10$ (2006.01)
$C08F\ 2/38$ (2006.01)

(54) **Process for the production of polyolefins with broad molecular weight distribution**

Verfahren zur Herstellung von Polyolefinen mit breiter Molekulargewichtverteilung

Procédé de production des polyoléfines avec large distribution de poids moléculaire

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.02.2009 EP 09001547**

(43) Date of publication of application:
**13.02.2013 Bulletin 2013/07**

(62) Document number(s) of the earlier application(s) in accordance with Art. 76 EPC:
**10703234.4 / 2 393 840**

(73) Proprietor: **Borealis AG**
**1220 Vienna (AT)**

(72) Inventors:
• **Bernreitner, Klaus**
  **4010 Linz (AT)**
• **Potter, Elisabeth**
  **4020 Linz (AT)**
• **Horill, Thomas**
  **2201 Gerasdorf (AT)**
• **Pillinger, Franz**
  **2325 Himberg (AT)**

(74) Representative: **Kador & Partner**
**Corneliusstraße 15**
**80469 München (DE)**

(56) References cited:
EP-A1- 1 004 603      WO-A1-99/03897
WO-A1-2006/089394    DE-A1- 19 930 594
US-A- 3 472 829       US-A- 6 156 854

**EP 2 557 092 B1**

**Description**

The present invention is concerned with a process for the production of polyolefins having a broad molecular weight distribution.

Polyolefins having a broad molecular weight distribution combine desirable mechanical properties with good processability. The long polymer chains improve mechanical properties like toughness and stiffness, whereas the short polymer chains are decisive for the processability of the polymer.

DE 199 30 594 summarizes several prior art attempts to broaden the molecular weight distribution by e.g. blending of fractions having different molecular weight or the use of a cascade of reactors wherein in each reactor different process conditions are applied to produce a polyolefin with different molecular weight resulting in an "in-situ blend" having a broader molecular weight distribution than the respective fractions.

However, the melt blending of components often yields poor results. In addition, each fraction would have to be prepared separately, which increases the costs. The use of a cascade of reactors to produce polyolefins with different molecular weight in each reactor to obtain a polyolefin with broad MWD also results in higher productions costs due to the number of reactors involved and yields insufficient homogeneity.

DE 199 30 594 further describes a method for the production of polyolefins, especially polyethylene copolymers with 1-hexene by periodic variation of the temperature resulting in a broadening of the MWD ($M_w/M_n$) by 30% to a value of 13. The reaction is carried out in a laboratory scale single reactor having a volume of only 0.2 $m^3$ wherein a quick variation of the temperature is possible.

US 6,156,854 describes propylene homopolymers with a MWD ($M_w/M_n$) of up to 13 having a very low $MFR_2$

There is insofar still the need for a process allowing the production of a polymer having an extremely broad polydispersity index and at the same time relatively high tensile modulus in an industrial scale.

The present invention thus provides a process for the production of a propylene homo- or copolymer according to claim 1. The thus obtained propylene homo- or copolymer usually has

- a polydispersity index (PI), determined according ISO 6721-1, of at least 7.0 $Pa^{-1}$; and

- a tensile modulus, determined according to ISO 527-2, of at least 1600 MPa measured on a test specimen prepared by injection molding according to ISO 1873-2.

The propylene homo- or copolymer produced by the inventive process surprisingly has an improved tensile modulus and a good processability albeit the very broad molecular weight distribution.

The tensile modulus is a property of the propylene homo- or copolymer. Therefore, the test specimen does not comprise any nucleating agent. The exact determination method is described in the experimental part.

The molecular weight distribution is frequently determined as $M_w/M_n$ by gel permeation chromatography (GPC), which is a solvent technique measuring the percentage or distribution of molecules having different molecular weight. The method is usually carried out according to ISO16014-1:2003. $M_w$ is the weight average molecular weight and $M_n$ is the number average molecular weight. In the literature the terms "the molecular weight distribution", "(MWD)", "polydispersity" and "polydispersity index" are prevalently used synonymously to denote the ratio $M_w/M_n$ which is scientifically not correct.

The use of GPC analysis finds its limitation when ultra high molecular weight material is concerned. GPC as a solution technique requires that the polymer chains are sufficiently soluble and sufficiently stable in solution. Polymers having a molecular weight of > 2,000,000 g/mol are generally completely insoluble. Furthermore, even if soluble, polymer chains with a molecular weight of above 1,000,000 g/mol tend to break when dissolved for the GPC measurement or during the measurement leading to an incorrect result. Thus, the GPC method is not easily applicable to polymers comprising a significant amount of a fraction having an $M_w$ of above 1,000,000 g/mol.

Apart from GPC measurement, the broadness of the molecular weight distribution can also be determined by melt rheological measurement according ISO 6721-1. The values obtained by said measurement are given in $Pa^{-1}$. This value is also referred to as polydispersity index (PI) in the literature, e.g. in WO 2008/006586.

All expressions containing letters from the Greek alphabet are repeated in squared brackets in case errors occur when reprinted.

The values of storage modulus (G'), loss modulus (G"), complex modulus (G*) and complex viscosity ($\eta^*$) [(eta*)] are obtained as a function of frequency ($\omega$) [(omega)] as described in the experimental part. The polydispersity index,

$$PI = 10^5/G_c,$$

is calculated from cross-over point of G'(ω) [G'(omega)] and G"(ω) [G"(omega)] at 230°C, for which

$$G'(\omega_c) = G''(\omega_c) = G_c \qquad [G'(omega_c) = G''(omega_c) = G_c]$$

holds.

A distinction between the polydispersity index (PI), measured according ISO 6721-1 and $M_w/M_n$ is without any ambiguity because $M_w/M_n$ is a dimensionless quantity whereas the PI determined according to ISO 6721-1 is reported in $Pa^{-1}$. In the present invention the term "polydispersity index" or "PI" denote the value obtained according ISO 6721-1.

Owing to the high broadness of the molecular weight distribution of the propylene homo- or copolymer produced by the inventive process, the polydispersity index according to ISO 6721-1 has been used to determine the molecular weight distribution.

Further, due to the high polydispersity of the polymers produced by the inventive process it was not possible to determine the weight average molecular weight ($M_w$) in the usual manner by GPC measurement either. Instead the weight average molecular weight was calculated from the zero shear viscosity ($\eta_0$) [(eta$_0$)] as resulting from a Cox-Merz conversion of the complex viscosity. Said calculation was carried out using a calibration curve established in Grein et al., Rheol Acta, (2007), 1083-1089. Unless otherwise mentioned the values given in the following for the $M_w$ have been determined as described in this paragraph.

Preferably, the propylene homo- or copolymer has a polydispersity index (PI), determined according ISO 6721-1, of at least $7.5 \ Pa^{-1}$, more preferably of at least $8.0 \ Pa^{-1}$ and most preferably of at least $8.5 \ Pa^{-1}$. Said PI is usually not higher than $15.0 \ Pa^{-1}$.

In case of a propylene copolymer the comonomer content is preferably not higher than 5 mol%, more preferably not more than 3 mol% and most preferably not more than 1 mol%.

Preferably the polypropylene produced by the inventive process is a propylene homopolymer.

Preferably, the propylene homo- or copolymer produced by the inventive process has a tensile modulus determined according to ISO 527-2 of at least 1675 MPa, more preferably of at least 1750 MPa and most preferably of at least 1800 MPa measured on a test specimen prepared by injection molding according to ISO 1873-2. Usually said tensile modulus does not exceed 3500 MPa.

Preferably, the propylene homo- or copolymer produced by the inventive process has an impact strength in a charpy notch test according to ISO 179/1eA:2000 at + 23 °C of at least $3.0 \ kJ/m^2$, more preferably of at least $3.5 \ kJ/m^2$ and most preferably of at least $4.0 \ kJ/m^2$ measured on a test specimen prepared by injection molding according to ISO 1873-2. Said impact strength is usually not higher than $50.0 \ kJ/m^2$.

Preferably, the propylene homo- or copolymer produced by the inventive process has a weight average molecular weight ($M_w$) of at least 400,000 g/mol, more preferably of at least 475,000 g/mol, even more preferably of at least 550,000 g/mol and most preferably of at least 600,000 g/mol. For processability reasons said $M_w$ does usually not exceed 1,500,000 g/mol.

In the present invention the term "obtained from the reactor" denotes the polymer as withdrawn from the reactor, usually in the form of a powder, i.e. not subjected to any further processing, such as a pelletizing step.

Preferably, the propylene homo- or copolymer obtained from the reactor has an $MFR_2$, measured according to ISO 1133 at 230°C and under a load of 2.16 kg, of at least 0.01 g/10 min, more preferably of at least 0.1 g/10 min, even more preferably of at least 1.0 g/10 min, even more preferably of at least 2.0 g/10 min and most preferably of at least 3.5 g/10 min.

Further, preferably, the propylene homo- or copolymer obtained from the reactor has an $MFR_2$, measured according to ISO 1133 at 230°C and under a load of 2.16 kg, of not more than 50 g/10 min, more preferably of not more than 25 g/10 min and most preferably of not more than 10 g/10 min.

Preferably, the propylene homo- or copolymer produced by the inventive process has a tensile stress at yield, determined according to ISO 527-2, of at least 35.0 MPa, more preferably of at least 37.0 MPa measured on a test specimen prepared by injection molding according to ISO 1873-2. Usually said tensile stress at yield is not higher than 70.0 MPa.

Preferably, the terminal relaxation time $\lambda_T$ [lambda$_T$] of the propylene homo- or copolymer produced by the inventive process calculated at a relaxation strength H(λ) [H(lambda)] of 0.1 Pa is at least 1000 s, more preferably at least 2500 s, even more preferably at least 4000 s. Usually said terminal relaxation time $\lambda_T$ [lambda$_T$] is calculated at a relaxation strength H(λ) [H(lambda)] of 0.1 Pa is not higher than 50,000 s.

Preferably, the propylene homo- or copolymer produced by the inventive process has a pentade concentration of more than 90 %, more preferably of more than 95 % and most preferably of more than 97 %.

Preferably, the propylene homo- or copolymer is produced in the presence of a Ziegler-Natta catalyst, more preferably in the presence of a Ziegler-Natta catalyst capable of catalyzing the polymerization of propylene at a pressure from 10 to 100 bar, preferably from 25 to 80 bar, and at a temperature from 40 to 120 °C, preferably from 60 to 100 °C.

The Ziegler-Natta catalyst preferably comprises a catalyst component, a cocatalyst component, an external donor, the catalyst component of the catalyst system primarily containing magnesium, titanium, halogen and an internal donor. Electron donors control the stereo-specific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds. The titanium compound usually is a halide or oxyhalide, an organic metal halide, or a purely metal organic compound in which only organic ligands have been attached to the transition metal. Particularly preferred are the titanium halides, especially titanium tetrachloride, titanium trichloride and titanium tetrachloride being particularly preferred.

Magnesium dichloride can be used as such or it can be combined with silica, e.g. by absorbing the silica with a solution or slurry containing magnesium dichloride. A lower alcohol can be used which preferably is methanol or ethanol and most preferably ethanol.

A preferred type of catalyst to be used in the invention is described in EP 591 224 disclosing a method for preparing a pro-catalyst composition from magnesium dichloride, a titanium compound, a lower alcohol and an ester of phthalic acid containing at least five carbon atoms. According to EP 591 224, a trans-esterification reaction is carried out at an elevated temperature between the lower alcohol and the phthalic acid ester, whereby the ester groups from the lower alcohol and the phthalic ester change places.

The alkoxy group of the phthalic acid ester used in EP 591 224 comprises at least five carbon atoms, preferably at least eight carbon atoms. Thus, as the ester may be used propylhexyl phthalate, dioctyl phthalate, diisodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the pro-catalyst composition, transesterifies the catalyst at an elevated temperature. It is preferred to carry out the transesterification at a temperature which is at least 110 °C, preferably is at least 120°C and which preferably does not exceed 140°C more preferably does not exceed 115 °C.

The catalyst is used together with an organometallic cocatalyst and with an external donor. Generally, the external donor has the formula

$$R_n R'_m Si(R''O)_{4-n-m}$$

wherein

R and R' can be the same or different and represent a linear, branched or cyclic aliphatic, or aromatic group;

R" is methyl or ethyl;

n is an integer of 0 to 3;

m is an integer of 0 to 3; and

n+m is 1 to 3.

Preferably, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-*tert*-butyl dimethoxy silane.

Any cocatalyst known in the art may be used in the present invention. Preferably, an organoaluminium compound is used as the cocatalyst. The organoaluminium compound is preferably selected from the group consisting of trialkyl aluminium, dialkyl aluminium chloride and alkyl aluminium sesquichloride.

Such catalysts are preferably introduced into the first reactor only. The components of the catalyst can be fed into the reactor separately or simultaneously or the components of the catalyst system can be precontacted prior to the reactor.

The present invention is directed to a simplified process for the production of polyolefins. This process allows to reduce the numbers of reactors required for the production of the respective polyolefin.

Therefore, the present invention provides a first embodiment of a process for the production of polyolefins which is described in the following. Further provided are a second and a third embodiment not according to the invention, respectively.

The following definitions apply to each of said three embodiments

The average residence time $\tau$ [tau] of the polymer in a reactor is defined as the ratio of the reaction volume of the reactor $V_R$ to the volumetric outflow rate from the reactor $Q_o$ i.e. $\tau = V_R/Q_o$ [tau = $V_R/Q_o$].

In case of a loop reactor or a liquid-filled continous stirred tank reactor (CSTR), $V_R$ equals to the reactor volume; in case of a normal CSTR, it equals to the volume of the slurry within the reactor.

As this invention is concerned with various time dependent kinetics the following definitions shall apply.

For this invention a periodically varying function shall consist of one or more period(s) of the same length.

In a periodically varying function the condition

$$f(x+a) = f(x)$$

is met for all values of x whereby a is the length of one variation period.

In the present application "monotonically increasing function" denotes a function wherein $f(x_2) \geq f(x_1)$ when $x_2 > x_1$.

In the present application "strictly monotonic increasing function" denotes a function wherein $f(x_2) > f(x_1)$ when $x_2 > x_1$.

In the present application "monotonically decreasing function" denotes a function wherein $f(x_2) \leq f(x_1)$ when $x_2 > x_1$.

In the present application "strictly monotonic decreasing function" denotes a function wherein $f(x_2) < f(x_1)$ when $x_2 > x_1$.

In a first embodiment of a process for the production of polyolefins the present invention is directed to a process for the production of polyolefins in one or more reactors, wherein in at least one reactor the process comprises the following steps

    (c) feeding one or more (co)monomers and hydrogen to said one reactor, whereby the hydrogen concentration in said one reactor is periodically varied;

    (d) preparing an olefin homo- or copolymer in the presence of an olefin polymerization catalyst;

    (e) withdrawing the olefin homo- or copolymer from said one reactor whereby

the following relation is fulfilled

$$\frac{P_H}{\tau} > 2.0$$

wherein

$P_H$    is the time of one variation period of the hydrogen concentration in said one reactor; and

$\tau$    [tau] is the average residence time of the polymer in said one reactor.

The average residence time of the polymer in said reactor is the ratio of the reaction volume of the reactor $V_R$ to the volumetric outflow rate from the reactor $Q_o$ i.e. $\tau = V_R/Q_o$ [tau = $V_R/Q_o$].

A variation period is the period of time in which the value of the initial hydrogen concentration in the reactor is reached again under the proviso that there is an enduring change. For example, if the initial hydrogen concentration is 80 ppm and is increased up to 5000 ppm and again lowered, the variation period will denote the period of time until the hydrogen concentration in the reactor is 80 ppm again.

The inventive process allows to significantly broaden the MWD ($M_w/M_n$) and the polydispersity index (PI) (up to 200 %) compared with a polymer produced in a single reactor without periodically varying the hydrogen concentration in said reactor whereby the process is applicable to reactors of any size and to several types of reactors, e.g. a stirred tank or loop reactor in the liquid phase, but it can also be carried out in a gas phase reactor like a fluidized bed reactor or stirred bed reactor.

Unless otherwise mentioned in the following preferred features of the process according to the first embodiment are described.

The variation of the hydrogen concentration of the reactor may be carried out in the from of a sinusoidal function, a non-sinusoidal rectangular, a saw-tooth function, a triangle function, one or more pulse functions, one or more step functions or any combination thereof.

The term "hydrogen concentration in said one reactor is periodically varied" denotes that the hydrogen concentration in said one said reactor is a function of time which is not constant.

The hydrogen concentration in the reactor is normally determined via on-line gas chromatography.

Unless otherwise mentioned in the following the term "polymerization" is tantamount to "preparing an olefin homo- or copolymer in the presence of an olefin polymerization catalyst".

For the purpose of the present invention the term "ppm" for the hydrogen concentration denotes parts per weight of hydrogen per one million parts per weight of the combined amount of hydrogen, monomers and diluent, if present, in the reactor.

Preferably, the hydrogen concentration in said reactor is varied within a range defined by a lower limit and an upper limit whereby the lower limit of the hydrogen concentration in said one reactor is varied within is preferably at least 10 ppm, more preferably at least 30 ppm and most preferably at least 60 ppm and wherein the upper limit of the range the hydrogen concentration in said one reactor is varied within is preferably not more than 20,000 ppm, more preferably not more than 17,500 ppm, even more preferably not more than 15,000 ppm and most preferably not more than 12,500 ppm.

Preferably, the difference: [upper limit minus lower limit] is at least 3,500 ppm, more preferably at least 5,000 ppm and most preferably at least 6,500 and most preferably at least 8,000 ppm.

The difference: [upper limit minus lower limit] is preferably not more than 19,000 ppm, more preferably not more than 16,000 ppm and most preferably not more than 13,000 ppm.

This shall be explained by means of the following non-limiting example wherein

- the hydrogen concentration is varied between 80 ppm and 10,000 ppm;

- thus, the difference [upper limit minus lower limit] is 9,920 ppm.

The periodical variation of the hydrogen concentration in said one reactor preferably starts with an increase of the hydrogen concentration in said reactor.

Preferably, one variation period comprises, more preferably consists of, two time segments $S_{inc}$ and $S_{dec}$ wherein

the time segment $S_{inc}$ is defined by

- a starting time $t_{inc}(0)$;

- a hydrogen concentration in said reactor at the starting time $t_{inc}(0)$ defined as $c_{inc}(0)$;

- an end time $t_{inc}(final)$;

- the length of time segment $S_{inc}$ is defined as

$$l(S_{inc}) = t_{inc}(final) - t_{inc}(0)$$

- a hydrogen concentration in said reactor at the end time $t_{inc}(final)$ defined as $c_{inc}(final)$; and

- the hydrogen concentration in said reactor at the starting time $t_{inc}(0)$ of said time segment $S_{inc}$ ($C_{inc}(0)$) is lower compared with the end time $t_{inc}(final)$ of said time segment $S_{inc}$ ($C_{inc}(final)$);

and wherein
the time segment $S_{dec}$ is defined by

- a starting time $t_{dec}(0)$;

- a hydrogen concentration in said one reactor at the starting time $t_{dec}(0)$ defined as $c_{dec}(0)$;

- an end time $t_{dec}(final)$;

- the length of time segment $S_{dec}$ is defined as

6

$$I(S_{dec}) = t_{dec}(final) - t_{dec}(0)$$

- a hydrogen concentration in said one reactor at the end time $t_{dec}(final)$ defined as $c_{dec}(final)$; and

- the hydrogen concentration in said one reactor at the starting time $t_{dec}(0)$ of said time segment $S_{dec}$ ($c_{dec}(0)$) is higher compared with the end time $t_{dec}(final)$ of said time segment $S_{dec}$ ($c_{dec}(final)$).

Thus, the hydrogen concentration at the start of $S_{inc}$ is lower than at the end of $S_{inc}$ and the hydrogen concentration at the start of $S_{dec}$ is higher than at the end of $S_{dec}$.

The increase of the hydrogen concentration in said one reactor during time segment $S_{inc}$ is preferably carried out according to the following equation (I)

$$c(t) = c_{inc}(0) + f_1(t) \cdot ppm/s \qquad (I)$$

wherein

$c(t)$      is the hydrogen concentration in said one reactor at the time $t$
$c_{inc}(0)$      is the hydrogen concentration in said one reactor at the starting time $t_{inc}(0)$ of time segment $S_{inc}$
$f_1(t)$      is a monotonically increasing function or a strictly monotonic increasing function; and

$$f_1(t_{inc}(0)) = 0 \text{ s.}$$

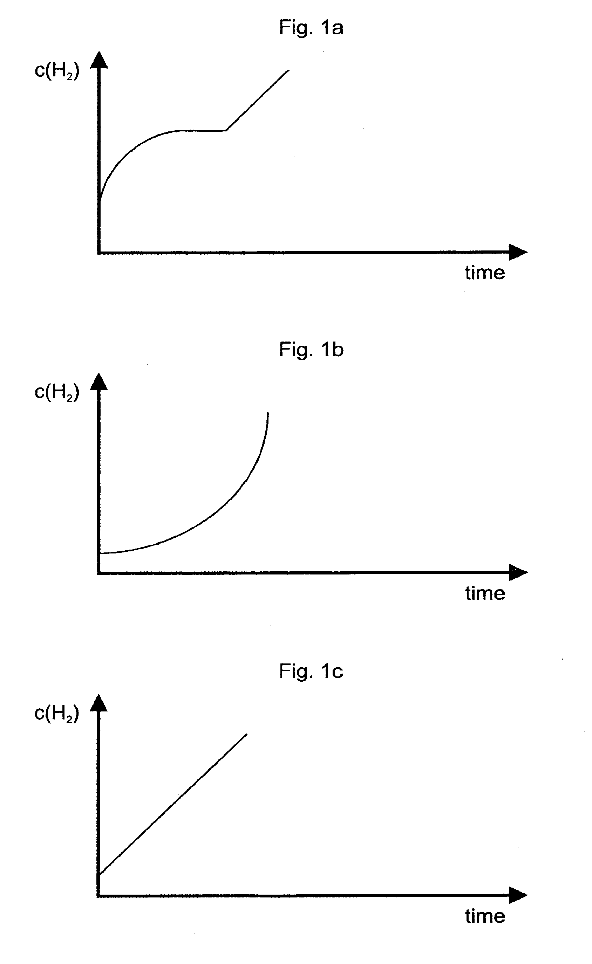

Preferably, $f_1(t)$ is a strictly monotonic increasing function and more preferably $f_1(t)$ is a linear increasing function.
Non-limiting examples for $S_{inc}$ are given in Fig. 1a) to c), whereby

-   in Fig. 1a) $f_1(t)$ is a monotonically increasing function;
-   in Fig. 1b) $f_1(t)$ is a strictly monotonic increasing function; and
-   in Fig. 1c) $f_1(t)$ is a linear increasing function

The decrease of the hydrogen concentration in said one reactor during time segment $S_{dec}$ is preferably carried out according to the following equation (II)

$$c(t) = c_{dec}(0) + f_2(t) \cdot ppm/s \qquad (II)$$

wherein

$c(t)$      is the hydrogen concentration in said one reactor at the time $t$
$c_{dec}(0)$      is the hydrogen concentration in said one reactor at the starting time $t_{dec}(0)$ of time segment $S_{dec}$
$f_2(t)$      is a monotonically decreasing function or a strictly monotonic decreasing function; and

$$f_2(t_{dec}(0)) = 0 \text{ s.}$$

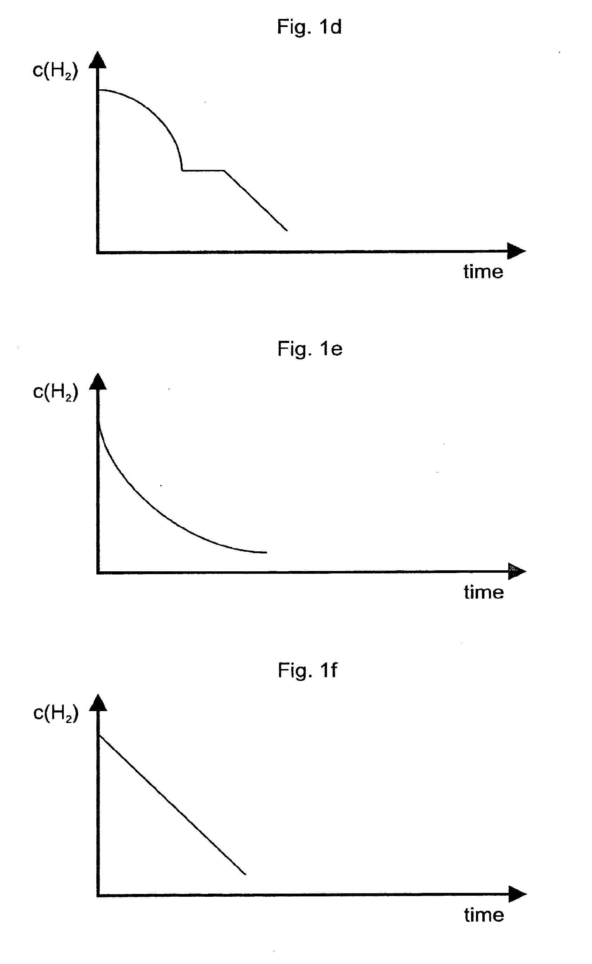

Preferably, $f_2(t)$ is a strictly monotonic decreasing function and more preferably a linear decreasing function.
Non-limiting examples for $S_{inc}$ are given in Fig. 1 d) to e), whereby

-   in Fig. 1d) $f_2(t)$ is a monotonically decreasing function;
-   in Fig. 1e) $f_2(t)$ is a strictly monotonic decreasing function; and
-   in Fig. 1f) $f_2(t)$ is a linear decreasing function.

A variation period may further comprise a time segment $S_{const}$ between time segment $S_{inc}$ and time segment $S_{dec}$ wherein the polymerization of the olefin homo- or copolymer is carried out at a constant hydrogen concentration $c_{const}$ in the reactor

whereby

- in case time segment $S_{inc}$ precedes time segment $S_{dec}$ preferably $c_{const} = c_{inc}(final)$;

- in case time segment $S_{dec}$ precedes time segment $S_{inc}$ preferably $c_{const} = c_{dec}(final)$;
and

- preferably, the length of time segment $S_{const}$ ($l(S_{const})$), if present is less than 10.0 hours, more preferably less than 5.0 hours, even more preferably less than 1.0 hour and most preferably less than 0.5 hours.

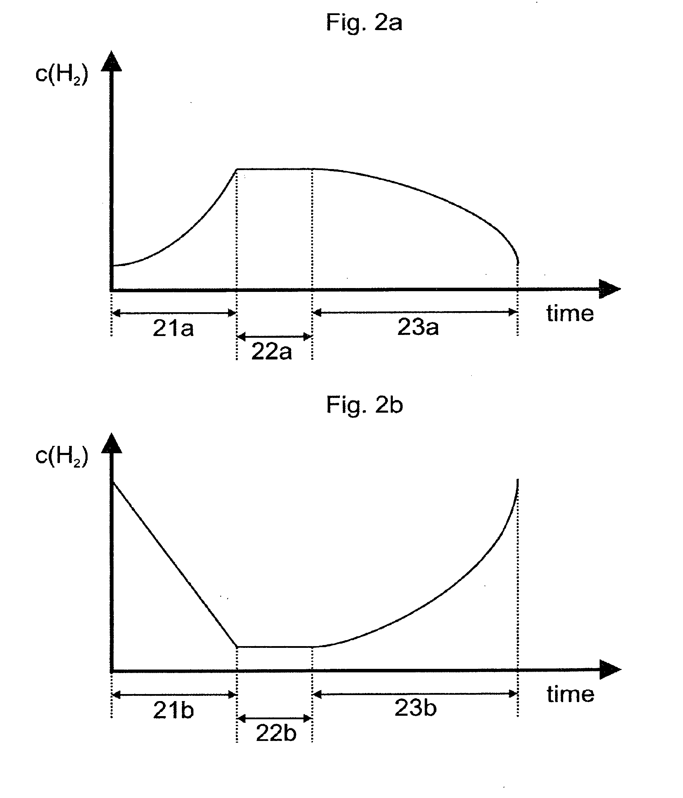

Non-limiting examples for a variation period comprising time segment $S_{const}$ between time segment Sine and time segment $S_{dec}$ are given in Fig. 2a) and b) wherein

- in Fig 2a) 21 a corresponds to $S_{inc}$, 22a corresponds to $S_{const}$ and 23a corresponds to $S_{dec}$; and

- in Fig 2b) 21 b corresponds to $S_{dec}$, 22b corresponds to $S_{const}$ and 23b corresponds to $S_{inc}$.

Preferably one variation period consists of time segments $S_{inc}$, $S_{dec}$ and $S_{const}$ and more preferably one variation period consists of time segments $S_{inc}$ and $S_{dec}$.
In case $S_{inc}$ precedes $S_{dec}$ preferably $c_{inc}(final) = c_{dec}(0)$ and/or $c_{inc}(0) = c_{dec}(final)$, more preferably $c_{inc}(final) = c_{dec}(0)$ and $c_{inc}(0) = c_{dec}(final)$.
In case $S_{dec}$ precedes $S_{inc}$ preferably $c_{dec}(final) = c_{inc}(0)$ and/or $c_{dec}(0) = c_{inc}(final)$, more preferably $c_{dec}(final) = c_{inc}(0)$ and $c_{dec}(0) = c_{inc}(final)$.
In each variation period $S_{inc}$ preferably precedes $S_{dec}$. Thus, preferably the periodically variation starts with an increase of the hydrogen concentration in said one reactor.
In case each variation period consists of time segments $S_{inc}$, $S_{dec}$ and $S_{const}$, the time of one variation period ($P_H$) is defined as

$$P_H = l(S_{inc}) + l(S_{dec}) + l(S_{const})$$

In case each variation period consists of time segments $S_{inc}$ and $S_{dec}$ the time of one variation period ($P_H$) is defined as

$$P_H = l(S_{inc}) + l(S_{dec})$$

The variation of the hydrogen concentration in the reactor is preferably carried out by varying the hydrogen concentration of the hydrogen/monomer feed.
When the hydrogen concentration of the hydrogen/monomer feed is increased or decreased the hydrogen concentration in the reactor is also increased or decreased respectively. However, the variation of the hydrogen concentration of the hydrogen/monomer feed is not equivalent to the hydrogen concentration in the reactor as the chemical system will normally require some time to respond to the chemical input.
The decrease of the hydrogen concentration in said one reactor in each variation period is usually achieved by reducing the hydrogen concentration of the hydrogen/monomer feed.
The reduction of the hydrogen concentration of the hydrogen/monomer feed may be carried out by a monotonically decreasing or a strictly monotonic decreasing function.
Alternatively and preferably, the hydrogen concentration of the hydrogen/monomer feed is abruptly reduced, more preferably is abruptly reduced to the lower limit of the hydrogen concentration in said reactor is varied within.
Preferably, in case, one variation period comprises, more preferably consists of, two time segments $S_{inc}$ and $S_{dec}$, the hydrogen concentration of the hydrogen/monomer feed is reduced within time segment $S_{dec}$ to $c_{dec}(final)$, more preferably is abruptly reduced to $c_{dec}(final)$ within time segment $S_{dec}$ and most preferably is abruptly reduced to $c_{dec}(final)$ at $t_{dec}(0)$.
An abrupt reduction of the hydrogen concentration of the hydrogen/monomer feed leads to a decrease of the hydrogen concentration in the reactor owing to the consumption of the hydrogen present in the reactor.
Preferably, step (c) is preceded by the following step

(b) feeding one or more (co)monomers and hydrogen to the reactor, whereby the hydrogen concentration in the reactor is remained constant.

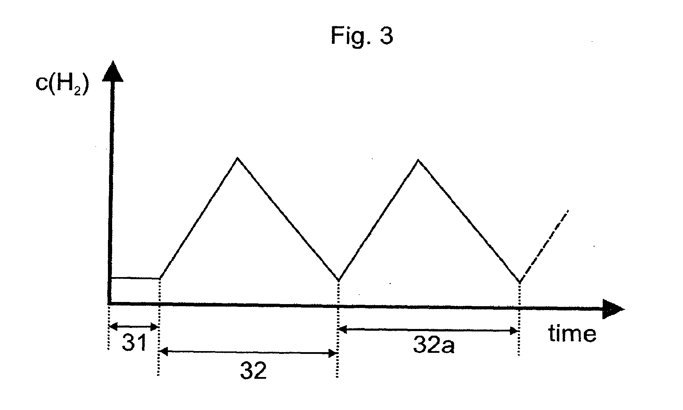

A non-limiting example of a process comprising step (b) is shown in Fig. 3 wherein 31 corresponds to step (b) and 32 and 32a are each one variation period.

Preferably, in step (b), if present, the same comonomer(s) as in step (c) are fed to said one reactor.

In step (b) if present the hydrogen concentration in said one reactor is preferably either equal to $c_{inc}(0)$ in case step (d) starts with time segment $S_{inc}$ or equal to $c_{dec}(0)$ in case step (d) starts with time segment $S_{dec}$.

Preferably, step (b), if present, or step (c), if step (b) is not present, is preceded by the following step

(a) prepolymerising the olefin polymerization catalyst with one or more comonomer(s)

Preferably, the process is a process for the production of $C_2$- to $C_8$- olefin homo- or copolymers, more preferably for the production of a propylene homo- or copolymer, even more preferably, for the production of a propylene homopolymer or a propylene block copolymer comprising a propylene homopolymer and a propylene/alpha-olefin rubber. In the latter case, the comonomers used for the production of the propylene/alpha-olefin rubber are preferably selected from ethylene and/or $C_4$- to $C_{20}$-alpha-olefins, even more are preferably selected from ethylene and/or $C_4$-to $C_{15}$-alpha-olefins, even more are preferably selected from ethylene and/or $C_4$- to $C_{10}$-alpha-olefins, e.g. ethylene, 1-butene, 1-hexene, 1-octene, and most preferably the alpha-olefin is ethylene.

In case of a propylene block copolymer comprising a propylene homopolymer and a propylene/alpha-olefin rubber, preferably the propylene homopolymer is produced in said one reactor.

For technical and economical reasons usually not more than five different comonomers are fed to the reactor during the process.

Preferably, process steps (c), (d) and (b), if present, are carried out at a temperature of at least 40 °C, more preferably of at least 50 °C.

Further, preferably, process steps (c), (d) and (b), if present, are carried out at a temperature of not more than 110 °C, more preferably of not more than 90 °C and most preferably of not more than 80 °C.

Preferably, the time of one variation period ($P_H$) is at least 4.0 h, more preferably is at least 6.0 h, even more preferably is at least 8.0 h and most preferably is at least 10.0 h.

Further, preferably, the time of one variation period ($P_H$) is not more than 50 h, more preferably is not more than 40 h, even more preferably is not more than 30 h, even more preferably is not more than 25 h and most preferably is not more than 20 h.

Preferably, the average residence time ($\tau$) [(tau)] is at least 0.25 hours, more preferably is at least 0.50 hours, even more preferably is at least 0.75 hours even more preferably is at least 1.0 hour and most preferably is at least 1.25 hours.

Further, preferably, the average residence time ($\tau$) [(tau)] is not more than 3.0 hours, more preferably is not more than 2.5 hours, even more preferably is not more than 2.0 hours and most preferably is not more than 1.75 hours.

Preferably, the ratio $P_H/\tau$ [$P_H$/tau] is at least 3.0, even more preferably is at least 4.0, even more preferably is at least 5.0, even more preferably is at least 6.0 and most preferably at least 7.0.

Preferably, the ratio $P_H/\tau$ [$P_H$/tau] is not more than 50, more preferably is not more than 35, even more preferably is not more than 25, even more preferably is not more than 20, and most preferably is not more than 18.

In case each variation period consist of time segments $S_{inc}$, $S_{dec}$ and $S_{const}$, the time of one variation period ($P_H$) is defined as

$$P_H = I(S_{inc}) + I(S_{dec}) + I(S_{const})$$

In case each variation period consist of time segments $S_{inc}$ and $S_{dec}$ the time of one variation period ($P_H$) is defined as

$$P_H = I(S_{inc}) + I(S_{dec})$$

Preferably, $I(S_{inc})$ is at least is at least 2.0 hours, more preferably is at least 3.0 hours, more preferably is at least 4.0 hours and most preferably is at least 5.0 hours.

Further, preferably, $I(S_{inc})$ is not more than 20 hours, more preferably is not more than 15 hours, more preferably is not more than 12.5 hours and most preferably is not more than 10 hours.

Preferably, $I(S_{dec})$ is at least is at least 2.0 hours, more preferably is at least 3.0 hours, more preferably is at least 4.0 hours and most preferably is at least 5.0 hours.

Further, preferably, $I(S_{dec})$ is not more than 20 hours, more preferably is not more than 15 hours, more preferably is not more than 12.5 hours and most preferably is not more than 10 hours.

In a second embodiment of the process not according to the present invention, the propylene homo- or copolymer is produced in one or more reactors, wherein in at least one reactor the process comprises the following steps

(c) feeding propylene and one or more comonomers to the reactor whereby the ratio of the total molar amount of the comonomer(s) in the reactor to the total molar amount of propylene is periodically varied;
(d) preparing a propylene copolymer in the presence of an olefin polymerization catalyst;
(e) withdrawing the propylene copolymer from said one reactor whereby
the following relation is fulfilled

$$\frac{P_C}{\tau} > 2.0$$

wherein

$P_c$     is the time of one variation period of the ratio of the total molar amount of the comonomer(s) in said one reactor to the total molar amount of propylene in said one reactor; and

$\tau$     [tau] is the average residence time of the polymer in said one reactor.

The average residence time of the polymer in said reactor is the ratio of the reaction volume of the reactor $V_R$ to the volumetric outflow rate from the reactor $Q_o$ i.e. $\tau = V_R/Q_o$ [tau = $V_R$/Qo].

A variation period is the period of time in which the value of the initial ratio of the total molar amount of the comonomer(s) in the reactor to the total molar amount of propylene in the reactor is reached again under the proviso that there is an enduring change. For example, if the initial ratio of the total molar amount of the comonomer(s) in the reactor to the total molar amount of propylene is 0.05 and is increased up to 0.50 and again lowered, the variation period will denote the period of time until the ratio of the total molar amount of the comonomer(s) in the reactor to the total molar amount of propylene is 0.05 again.

The incorporation of comonomers, e.g. alpha-olefins, into propylene copolymers during the polymerization process and the catalyst activity is dependent on the type and concentration of the comonomer as *inter alia* described in Polypropylene Handbook, 2nd Edition, Hanser Publishers, Munich, ISBN-No. 3-446-22978-7 on pages 84 et seq.

In the second embodiment not according to the present invention, the term "comonomer" denotes any monomer used in the process different from propylene.

A periodic variation of the ratio of the total molar amount of the comonomer(s) in the reactor to the total molar amount of propylene thus allows to produce propylene copolymers with different comonomer content within one reactor whereby the process is applicable to reactors of any size and to several types of reactors, e.g. a stirred tank or loop reactor in the liquid phase, but it can also be carried out in a gas phase reactor, like a fluidized bed reactor or stirred bed reactor.

Unless otherwise mentioned in the following preferred features of process according to the second embodiment are described.

The term "ratio of the total molar amount of the comonomer(s) in the reactor to the total molar amount of propylene" denotes that the ratio of the molar amount of all comonomer(s) to the molar amount of propylene in said one reactor is a function of time which is not constant.

The variation of the ratio of the total molar amount of the comonomer(s) in the reactor to the total molar amount of propylene may be carried out in the from of a sinusoidal function, a non-sinusoidal rectangular, a saw-tooth function, a triangle function, one or more pulse functions, one or more step functions or any combination thereof.

The total molar amount of the comonomer(s) in the reactor to the total molar amount of propylene in the reactor is normally determined via on-line gas chromatography.

Unless otherwise mentioned in the following the term "polymerization" is tantamount to "preparing a propylene homo- or copolymer in the presence of an olefin polymerization catalyst"

Preferably, ratio of the total molar amount of the comonomer(s) in the reactor to the total molar amount of propylene is varied within a range defined by a lower limit and an upper limit whereby the lower limit of said range preferably is at least 0.005, more preferably at least 0.010, even more preferably at least 0.020 and most preferably at least 0.040 and wherein preferably the upper limit of said range is not more than 0.800, more preferably not more than 0.700, even more preferably not more than 0.600 and most preferably not more than 0.500.

Preferably, the difference: [upper limit minus lower limit] is at least 0.200, more preferably at least 0.300, even more preferably at least 0.400 and most preferably at least 0.500.

The difference: [upper limit minus lower limit] is preferably not more than 0.750, more preferably not more than 0.650 and most preferably not more than 0.550.

This shall be explained by means of the following non-limiting example wherein

- the amount of propylene in the reactor is 120 mol;

- ethylene is used as comonomer, its amount in the reactor is varied between 12 mol and 60 mol during each variation period;

- thus, the lower limit is 12/120 = 0.10; and the upper limit is 60/120 = 0.50; and

- the difference [upper limit minus lower limit] is 0.40.

Preferably, the periodical variation of the ratio of the total molar amount of the comonomer(s) in the reactor to the total molar amount of propylene starts with an increase of the ratio of the total molar amount of the comonomer(s) in the reactor to the total molar amount of propylene.

Preferably, one variation period comprises, more preferably consists of, two time segments $S_{inc}$ and $S_{dec}$ wherein

the time segment $S_{inc}$ is defined by

- a starting time $t_{inc}(0)$;
- a ratio of the total molar amount of the comonomer(s) in the reactor to the total molar amount of propylene at the starting time $t_{inc}(0)$ defined as $r_{inc}(0)$;
- an end time $t_{inc}(final)$;
- the length of time segment $S_{inc}$ is defined as

$$l(S_{inc}) = t_{inc}(final) - t_{inc}(0)$$

- a ratio of the total molar amount of the comonomer(s) in the reactor to the total molar amount of propylene at the end time $t_{inc}(final)$ defined as $r_{inc}(final)$; and
- the ratio of the total molar amount of the comonomer(s) in the reactor to the total molar amount of propylene at the starting time $t_{inc}(0)$ of said time segment $S_{inc}$: $(r_{inc}(0))$ is lower compared with the end time $t_{inc}(final)$ of said time segment $S_{inc}$ $(r_{inc}(final))$;
  and wherein
  the time segment $S_{dec}$ is defined by
- a starting time $t_{dec}(0)$;
- a ratio of the total molar amount of the comonomer(s) in the reactor to the total molar amount of propylene at the starting time $t_{dec}(0)$ defined as $r_{dec}(0)$;
- an end time $t_{dec}(final)$;
- the length of time segment $S_{dec}$ is defined as

$$l(S_{dec}) = t_{dec}(final) - t_{dec}(0)$$

- a ratio of the total molar amount of the comonomer(s) in the reactor to the total molar amount of propylene at the end time $t_{dec}(final)$ defined as $r_{dec}(final)$; and
- the ratio of the total comonomer concentration in the reactor to the total propylene concentration at the starting time $t_{dec}(0)$ of said time segment $S_{dec}$ $(r_{dec}(0))$ is higher compared with the end time $t_{dec}(final)$ of said time segment $S_{dec}$ $(r_{dec}(final))$.

Thus, the ratio of the total molar amount of the comonomer(s) in the reactor to the total molar amount of propylene at the start of $S_{inc}$ is lower than at the end of $S_{inc}$ and the ratio of the total comonomer concentration in the reactor to the total propylene concentration at the start of $S_{dec}$ is higher than at the end of $S_{dec}$.

The increase of the ratio of the total molar amount of the comonomer(s) in the reactor to the total molar amount of propylene during time segment $S_{inc}$ is preferably carried out according to the following equation (III)

$$r(t) = r_{inc}(0) + f_3(t)\,/s \qquad\qquad (III)$$

wherein

r(t)    is the ratio of the total molar amount of the comonomer(s) in the reactor to the total molar amount of propylene at the time t

$r_{inc}(0)$    is the ratio of the total molar amount of the comonomer(s) in the reactor to the total molar amount of propylene at the starting time $t_{inc}(0)$ of time segment $S_{inc}$

$f_3(t)$    is a monotonically increasing function or a strictly monotonic increasing function; and

$$f_3(t_{inc}(0)) = 0\ s.$$

Preferably, $f_3(t)$ is a strictly monotonic increasing function and more preferably $f_3(t)$ is a linear increasing function.

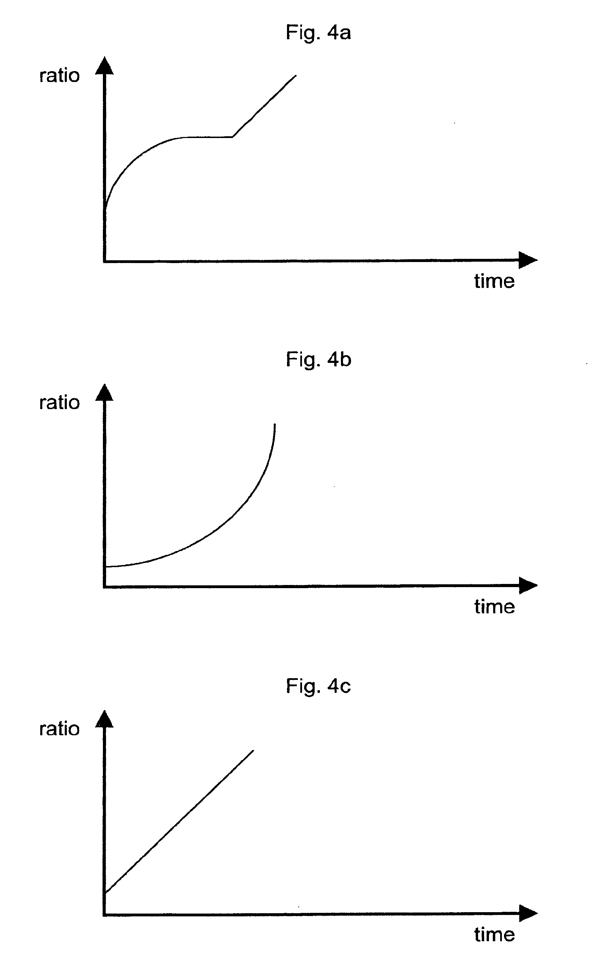

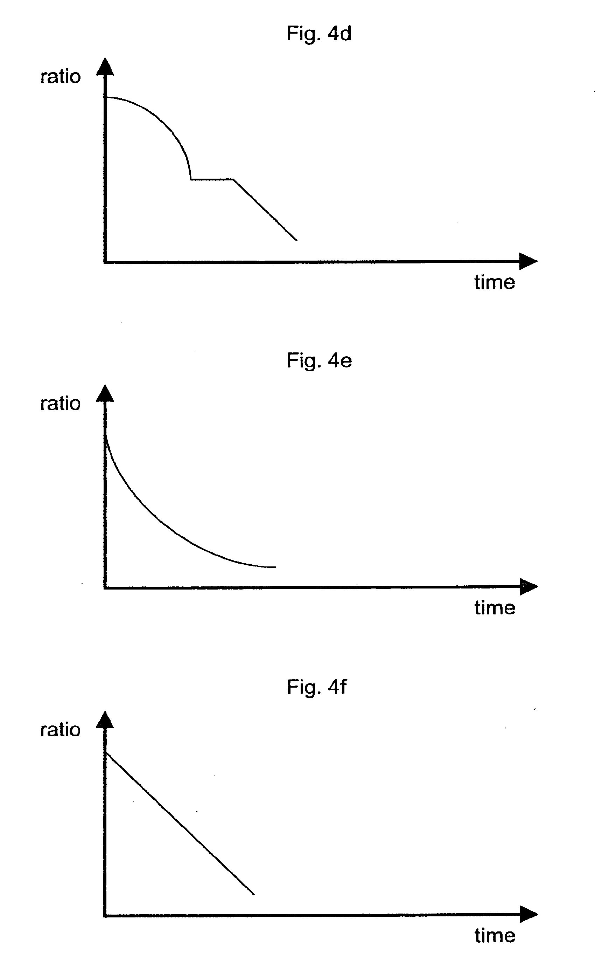

Non-limiting examples for $S_{inc}$ are given in Fig. 4 a) to c), whereby

- in Fig. 4a) $f_3(t)$ is a monotonically increasing function;
- in Fig. 4b) $f_3(t)$ is a strictly monotonic increasing function; and
- in Fig. 4c) $f_3(t)$ is a linear increasing function

The decrease of the ratio of the total molar amount of the comonomer(s) in the reactor to the total molar amount of propylene during time segment $S_{dec}$ is preferably carried out according to the following equation (IV)

$$r(t) = r_{dec}(0) + f_4(t)/s \qquad\qquad (IV)$$

wherein

r(t)    is the ratio of the total molar amount of the comonomer(s) in the reactor to the total molar amount of propylene at the time t

$r_{dec}(0)$    is the ratio of the total molar amount of the comonomer(s) in the reactor to the total molar amount of propylene at the starting time $t_{dec}(0)$ of time segment $S_{dec}$

$f_4(t)$    is a monotonically decreasing function or a strictly monotonic decreasing function; and

$$f_4(t_{dec}(0)) = 0\ s.$$

Preferably, $f_4(t)$ is a strictly monotonic decreasing function and more preferably a linear decreasing function.

Non-limiting examples for $S_{dec}$ are given in Fig. 4 d) to e), whereby

- in Fig. 4d) $f_4(t)$ is a monotonically decreasing function;
- in Fig. 4e) $f_4(t)$ is a strictly monotonic decreasing function; and
- in Fig. 4f) $f_4(t)$ is a linear decreasing function.

A variation period may further comprise a time segment $S_{const}$ wherein the polymerization of the propylene copolymer is carried out at a constant ratio of the total molar amount of the comonomer(s) in the reactor to the total molar amount of propylene $r_{const}$ between time segment $S_{inc}$ and time segment $S_{dec}$ whereby

- in case time segment $S_{inc}$ precedes time segment $S_{dec}$ preferably $r_{const} = r_{inc}(final)$;

- in case time segment $S_{dec}$ precedes time segment $S_{inc}$ preferably $r_{const} = r_{dec}(final)$; and

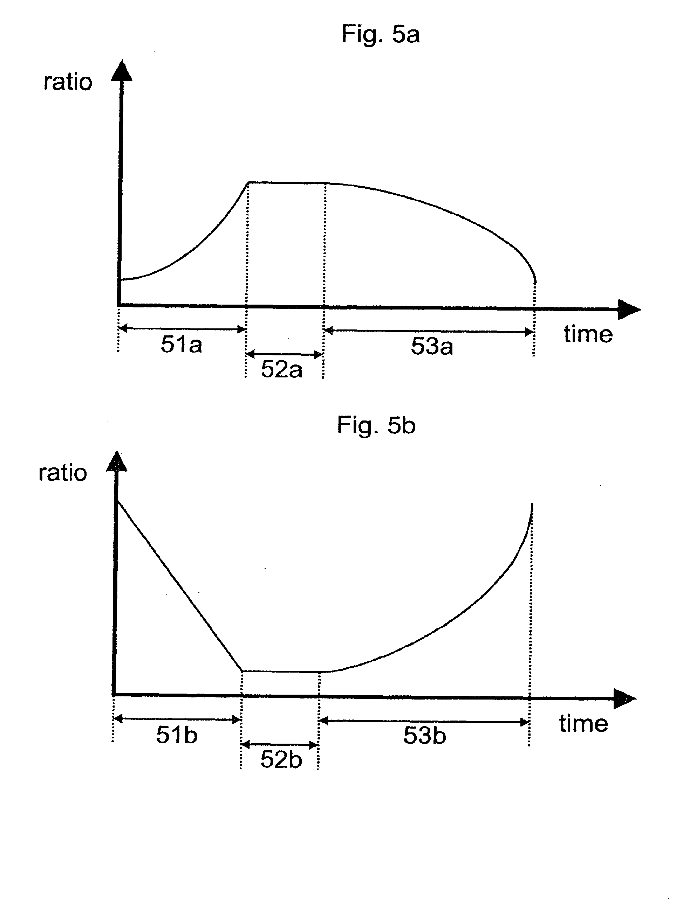

- preferably, the length of time segment $S_{const}$ ($l(S_{const})$), if present is less than 10.0 hours, more preferably less than 5.0 hours, even more preferably less than 1.0 hour and most preferably less than 0.5 hours.
  Non-limiting examples for a variation period comprising time segment $S_{const}$ between time segment $S_{inc}$ and time segment $S_{dec}$ are given in Fig. 5a) and b) wherein

- in Fig 5a) 51 a corresponds to $S_{inc}$, 52a corresponds to $S_{const}$ and 53a corresponds to $S_{dec}$; and

- in Fig 5b) 51 b corresponds to $S_{dec}$, 52b corresponds to $S_{const}$ and 53b corresponds to $S_{inc}$.

Preferably one variation period consists of time segments $S_{inc}$, $S_{dec}$ and $S_{const}$ and more preferably one variation period consists of time segments $S_{inc}$ and $S_{dec}$.

In case $S_{inc}$ precedes $S_{dec}$ preferably $r_{inc}(final) = r_{dec}(0)$ and/or $r_{inc}(0) = r_{dec}(final)$, more preferably $r_{inc}(final) = r_{dec}(0)$ and $r_{inc}(0) = r_{dec}(final)$.

In case $S_{dec}$ precedes $S_{inc}$ preferably $r_{dec}(final) = r_{inc}(0)$ and/or $r_{dec}(0) = r_{inc}(final)$ more preferably $r_{dec}(final) = r_{inc}(0)$ and $r_{dec}(0) = r_{inc}(final)$.

In each variation period $S_{inc}$ preferably precedes $S_{dec}$. Thus, preferably the periodically variation starts with an increase of the ratio of the total molar amount of the comonomer(s) in the reactor to the total molar amount of propylene .

Preferably, step (c) is preceded by the following step

(b) feeding propylene and one or more comonomer(s) to the reactor to the reactor, whereby the ratio of the total molar amount of the comonomer(s) in the reactor to the total molar amount of propylene is remained constant.

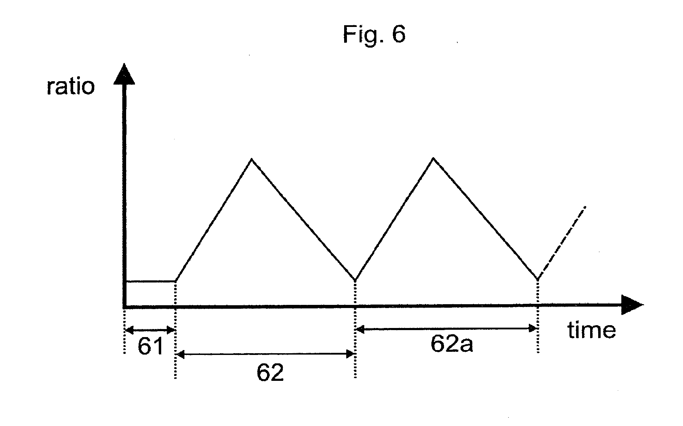

A non-limiting example of a process comprising step (b) is shown in Fig. 6 wherein 61 corresponds to step (b) and 62 and 62a are each one variation period.

Preferably, in step (b), if present, propylene and the same comonomer(s) as in step (c) are fed to the reactor.

The ratio of the total molar amount of the comonomer(s) in the reactor to the total molar amount of propylene in step (b), if present, is preferably either equal to $r_{inc}(0)$ in case step (d) starts with time segment $S_{inc}$ or equal to $r_{dec}(0)$ in case step (d) starts with time segment $S_{dec}$.

Preferably, step (b), if present, or step (c), if step (b) is not present, is preceded by the following step

(a) prepolymerising the olefin polymerization catalyst with propylene and optionally one or more comonomer(s)

Preferably, in step (a), if present, propylene and the same comonomer(s) as in step (c), are fed to the reactor.

Preferably, the comonomers used for the production of the propylene/alpha-olefin compolymer may be selected from ethylene and/or $C_4$- to $C_{20}$-alpha-olefins, more preferably from ethylene and/or $C_4$- to $C_{15}$-alpha-olefins, even more preferably from ethylene and/or $C_4$- to $C_{10}$-alpha-olefins, even more preferably selected from ethylene, 1-butene, 1-hexene, 1-octene, and most preferably the alpha-olefin is ethylene.

For technical and economical reasons usually not more than five different comonomers are fed to the reactor during the process.

Preferably, process steps (c), (d) and (b), if present, are carried out at a temperature of at least 40 °C, more preferably of at least 50 °C; and further, preferably, process steps (c), (d) and (b), if present, are carried out at a temperature of not more than 110 °C, more preferably of not more than 90 °C and most preferably of not more than 80 °C.

Preferably, the time of one variation period ($P_c$) is at least 4.0 h, more preferably is at least 6.0 h, even more preferably is at least 8.0 h and most preferably is at least 10.0 h.

Further, preferably, the time of one variation period ($P_c$) is not more than 50 h, more preferably is not more than 40 h, even more preferably is not more than 30 h, even more preferably is not more than 25 h and most preferably is not more than 20 h.

Preferably, the average residence time ($\tau$) [(tau)] is at least 0.25 hours, more preferably is at least 0.50 hours, even more preferably is at least 0.75 hours even more preferably is at least 1.0 hour and most preferably is at least 1.25 hours.

Further, preferably, the average residence time ($\tau$) [(tau)] is not more than 3.0 hours, more preferably is not more than 2.5 hours, even more preferably is not more than 2.0 hours and most preferably is not more than 1.75 hours.

Preferably, the ratio $P_c/_{\tau}$ [$P_c$/tau] is at least 3.0, even more preferably is at least 4.0, even more preferably is at least 5.0, even more preferably is at least 6.0 and most preferably at least 7.0.

Preferably, the ratio $P_c/_{\tau}$ [$P_c$/tau] is not more than 50, more preferably is not more than 35, even more preferably is not more than 25, even more preferably is not more than 20, and most preferably is not more than 18.

In case each variation period consist of time segments $S_{inc}$, $S_{dec}$ and $S_{const}$, the time of one variation period ($P_c$) is defined as

$$P_C = I(S_{inc}) + I(S_{dec}) + I(S_{const})$$

In case each variation period consist of time segments $S_{inc}$ and $S_{dec}$ the time of one variation period ($P_c$) is defined as

$$P_C = I(S_{inc}) + I(S_{dec})$$

Preferably, $I(S_{inc})$ is at least is at least 2.0 hours, more preferably is at least 3.0 hours, more preferably is at least 4.0 hours and most preferably is at least 5.0 hours.

Further, preferably, $I(S_{inc})$ is not more than 20 hours, more preferably is not more than 15 hours, more preferably is not more than 12.5 hours and most preferably is not more than 10 hours.

Preferably, $I(S_{dec})$ is at least is at least 2.0 hours, more preferably is at least 3.0 hours, more preferably is at least 4.0 hours and most preferably is at least 5.0 hours.

Further, preferably, $I(S_{dec})$ is not more than 20 hours, more preferably is not more than 15 hours, more preferably is not more than 12.5 hours and most preferably is not more than 10 hours.

In a third embodiment of the process not according to the present invention, the propylene homo- or copolymer is produced in one or more reactors, wherein in at least one reactor the process comprises the following steps

(c) feeding propylene and one or more comonomers to the reactor;
(d) preparing a propylene copolymer in the presence of an olefin polymerization catalyst whereby the temperature within said one reactor is periodically varied;
(e) withdrawing the propylene copolymer from said one reactor

whereby
the following relation is fulfilled

$$\frac{P_T}{\tau} > 2.0$$

wherein

$P_T$    is the time of one variation period of the temperature in said one reactor; and
$\tau$    [tau] is the average residence time of the polymer in said one reactor.

The average residence time of the polymer in said reactor is the ratio of the reaction volume of the reactor $V_R$ to the volumetric outflow rate from the reactor $Q_o$ i.e. $\tau = V_R/Q_o$ [tau = $V_R/Q_o$].

A variation period is the period of time in which the value of the initial temperature in the reactor is reached again under the proviso that there is an enduring change. For example, if the initial temperature within said at least one reactor is 80 °C and is increased up to 120 °C and again lowered, the variation period will denote the period of time until the temperature within said one reactor is 80 °C again.

The incorporation of comonomers, e.g. alpha-olefins, into propylene copolymers during the polymerization process and the catalyst activity is dependent on the type and concentration of the comonomer as *inter alia* described in Polypropylene Handbook, 2nd Edition, Hanser Publishers, Munich, ISBN-No. 3-446-22978-7 on pages 84 et seq.

The temperature of the reactor can be determined by any means known in the art, usually the temperature of the reactor is determined by thermocouples protruding from the inner wall of the reactor.

A periodic variation of the temperature thus allows to produce propylene copolymers with different comonomer content within one reactor whereby the process is applicable to reactors of any size and to several types of reactors, e.g. a stirred tank or loop reactor in the liquid phase, but it can also be carried out in a gas phase reactor, a fluidized bed like a fluidized bed reactor or stirred bed reactor.

The term "the temperature within said one reactor is periodically varied" denotes that the temperature in said one reactor is a function of time which is not constant.

The variation of the temperature may be carried out in the from of a sinusoidal function, a non-sinusoidal rectangular, a saw-tooth function, a triangle function, one or more pulse functions, one or more step functions or any combination thereof.

Unless otherwise mentioned in the following the term "polymerization" is tantamount to "preparing a propylene homo- or copolymer in the presence of an olefin polymerization catalyst"

Preferably, the temperature is varied within a range defined by a lower limit and an upper limit.

Preferably, the lower limit of the temperature is at least 66 °C, more preferably at least 70 °C, even more preferably at least 75 °C and most preferably at least 80 °C.

Preferably, the upper limit of the range the temperature is varied within is not more than 120 °C, more preferably not more than 115 °C, even more preferably not more than 110 °C and most preferably not more than 108 °C.

Preferably, the difference: [upper limit minus lower limit] is at least 25 °C more preferably at least 35 °C and most preferably at least 45 °C.

The difference: [upper limit minus lower limit] is preferably not more than 60 °C, more preferably not more than 55 °C and most preferably not more than 50 °C.

Preferably, the periodical variation of the temperature starts with an increase of the temperature within said one reactor.

Preferably, one variation period comprises, more preferably consists of, two time segments $S_{inc}$ and $S_{dec}$ wherein

the time segment $S_{inc}$ is defined by

- a starting time $t_{inc}(0)$;
- a temperatur at the starting time $t_{inc}(0)$ defined as $T_{inc}(0)$;
- an end time $t_{inc}(final)$;
- the length of time segment $S_{inc}$ is defined as

$$l(S_{inc}) = t_{inc}(final) - t_{inc}(0)$$

- a temperature at the end time $t_{inc}(final)$ defined as $T_{inc}(final)$; and
- the temperature at the starting time $t_{inc}(0)$ of said time segment $S_{inc}$: ($T_{inc}(0)$) is lower compared with the end time $t_{inc}(final)$ of said time segment $S_{inc}$ ($T_{inc}(final)$);

and wherein
the time segment $S_{dec}$ is defined by

- a starting time $t_{dec}(0)$;
- a temperature at the starting time $t_{dec}(0)$ defined as $T_{dec}(0)$;
- an end time $t_{dec}(final)$;
- the length of time segment $S_{dec}$ is defined as

$$l(S_{dec}) = t_{dec}(final) - t_{dec}(0)$$

- a temperature at the end time $t_{dec}(final)$ defined as $T_{dec}(final)$; and
- the temperature at the starting time $t_{dec}(0)$ of said time segment $S_{dec}$ ($T_{dec}(0)$) is higher compared with the end time $t_{dec}(final)$ of said time segment $S_{dec}$ ($T_{dec}(final)$).

Thus, the temperature at the start of $S_{inc}$ is lower than at the end of $S_{inc}$ and the temperature at the start of $S_{dec}$ is higher than at the end of $S_{dec}$.

The increase of the temperature during time segment $S_{inc}$ is preferably carried out according to the following equation (V)

$$T(t) = T_{inc}(0) + f_5(t) \cdot T/s \qquad\qquad (V)$$

wherein

$T(t)$       is temperature at the time t;
$T_{inc}(0)$       is the temperature at the starting time $t_{inc}(0)$ of time segment $S_{inc}$;
$f_5(t)$       is a monotonically increasing function or a strictly monotonic increasing function; and

$$f_5(t_{inc}(0)) = 0 \text{ s.}$$

Preferably, $f_5(t)$ is a strictly monotonic increasing function and more preferably $f_5(t)$ is a linear increasing function.

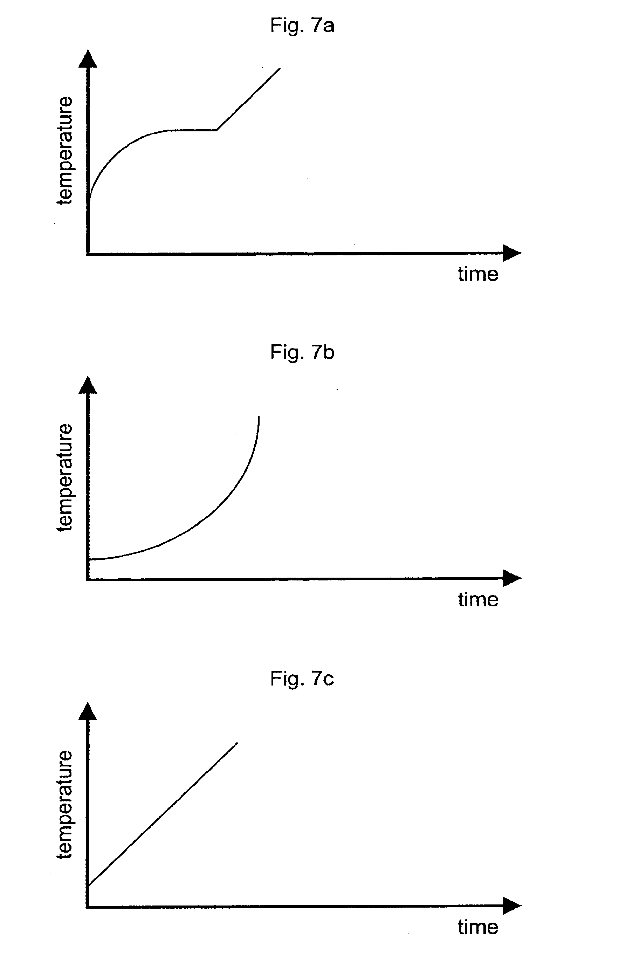

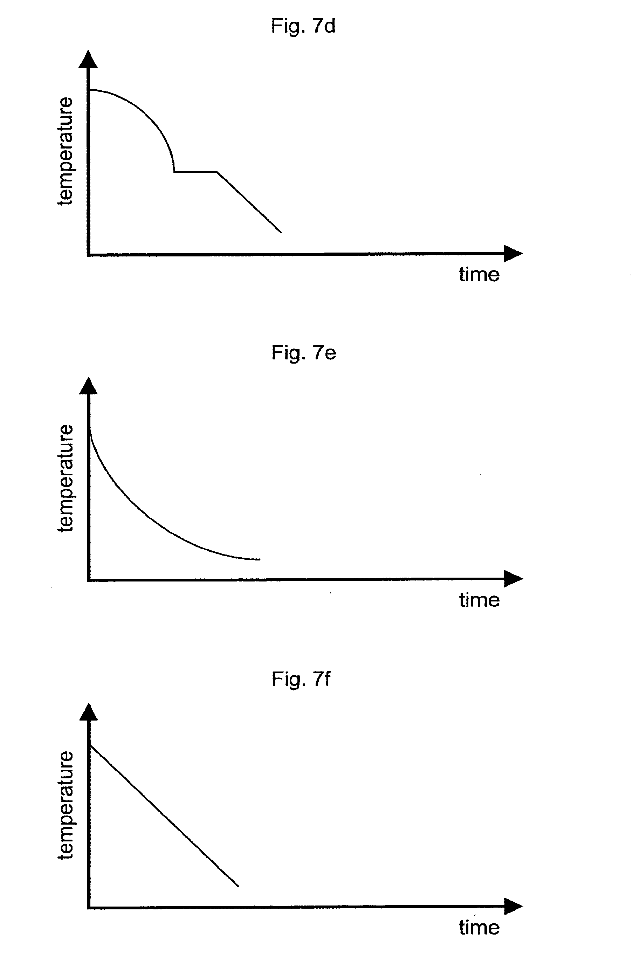

Non-limiting examples for $S_{inc}$ are given in Fig. 7 a) to c), whereby

- in Fig. 7a) $f_5(t)$ is a monotonically increasing function;
- in Fig. 7b) $f_5(t)$ is a strictly monotonic increasing function; and
- in Fig. 7c) $f_5(t)$ is a linear increasing function.

The decrease of the temperature during time segment $S_{dec}$ is preferably carried out according to the following equation (VI)

$$T(t) = T_{dec}(0) + f_6(t) \cdot T/s \qquad (VI)$$

wherein

$T(t)$ is the temperature at the time t;

$T_{dec}(0)$ is the temperature at the starting time $t_{dec}(0)$ of time segment $S_{dec}$;

$f_6(t)$ is a monotonically decreasing function or a strictly monotonic decreasing function; and

$$f_6(t_{dec}(0)) = 0 \text{ s.}$$

Preferably, $f_6(t)$ is a strictly monotonic decreasing function and more preferably a linear decreasing function.

Non-limiting examples for $S_{dec}$ are given in Fig. 7 d) to e), whereby

- in Fig. 7d) $f_6(t)$ is a monotonically decreasing function;

- in Fig. 7e) $f_6(t)$ is a strictly monotonic decreasing function; and

- in Fig. 7f) $f_6(t)$ is a linear decreasing function.

A variation period may further comprise a time segment $S_{const}$ wherein the polymerization of the propylene copolymer is carried out at a constant temperature $T_{const}$ between time segment $S_{inc}$ and time segment $S_{dec}$ whereby

- in case time segment $S_{inc}$ precedes time segment $S_{dec}$ preferably Tconst = $T_{inc}$(final);

- in case time segment $S_{dec}$ precedes time segment $S_{inc}$ preferably Tconst = $T_{dec}$(final); and

- preferably, the length of time segment $S_{const}$ (l($S_{const}$)), if present is less than 10.0 hours, more preferably less than 5.0 hours, even more preferably less than 1.0 hour and most preferably less than 0.5 hours.

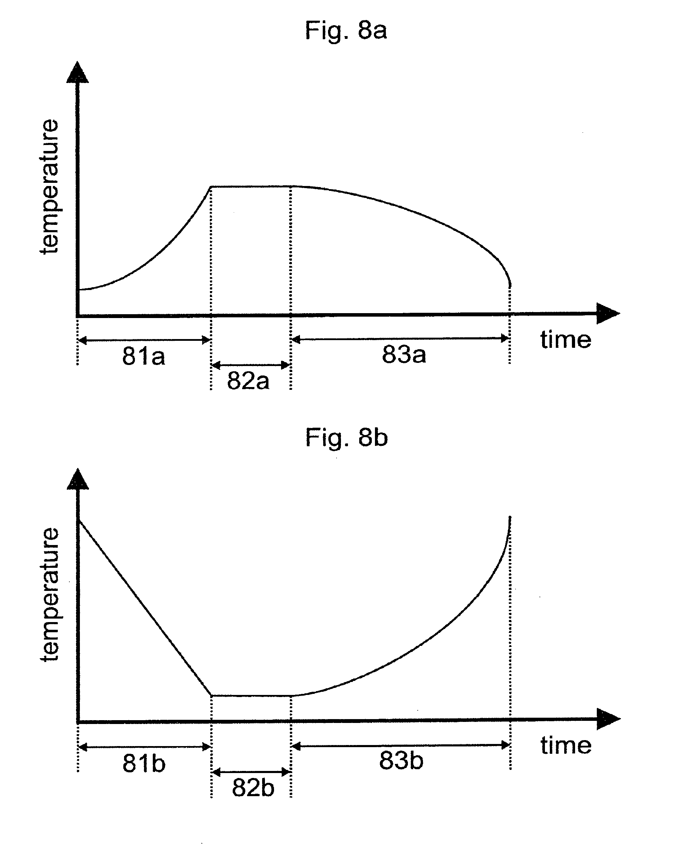

Non-limiting examples for a variation period comprising time segment $S_{const}$ between time segment $S_{inc}$ and time segment $S_{dec}$ are given in Fig. 8a) and b) wherein

- in Fig 8a) 81 a corresponds to $S_{inc}$, 82a corresponds to $S_{const}$ and 83a corresponds to $S_{dec}$; and

- in Fig 8b) 81 b corresponds to $S_{dec}$, 82b corresponds to $S_{const}$ and 83b corresponds to $S_{inc}$.

Preferably one variation period consists of time segments $S_{inc}$, $S_{dec}$ and $S_{const}$ and more preferably one variation period consists of time segments $S_{inc}$ and $S_{dec}$.

In case $S_{inc}$ precedes $S_{dec}$ preferably $T_{inc}(final) = T_{dec}(0)$ and/or $T_{inc}(0) = T_{dec}(final)$, more preferably $T_{inc}(final) = T_{dec}(0)$ and $T_{inc}(0) = T_{dec}(final)$.

In case $S_{dec}$ precedes $S_{inc}$ preferably $T_{dec}(final) = T_{inc}(0)$ and/or $T_{dec}(0) = T_{inc}(final)$, more preferably $T_{dec}(final) = T_{inc}(0)$ and $T_{dec}(0) = T_{inc}(final)$.

In each variation period $S_{inc}$ preferably precedes $S_{dec}$. Thus, preferably the periodically variation starts with an increase of the ratio of the molar amount of said at least one comonomer to the molar amount of propylene.

Preferably, step (c) is preceded by the following step

(b) feeding propylene and one or more comonomer(s) to the reactor, whereby the temperature is remained constant.

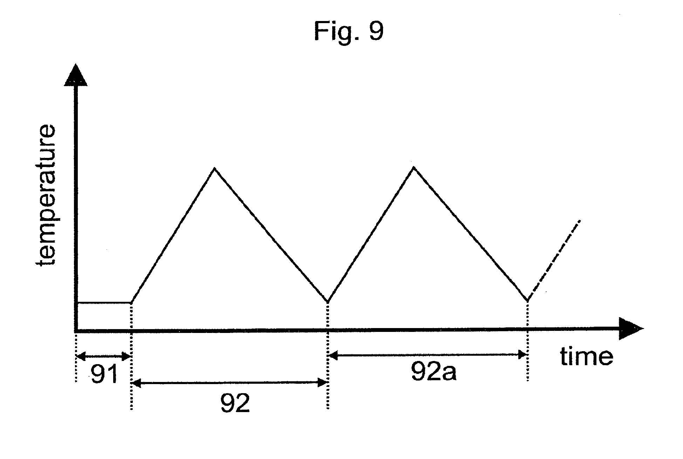

A non-limiting example of a process comprising step (b) is shown in Fig. 9 wherein 91 corresponds to step (b) and 92 and 92a are each one variation period.

Preferably, in step (b), if present, propylene and the same comonomer(s) as in step (c) are fed to the reactor.

The temperature in step (b), if present, is preferably either equal to $T_{inc}(0)$ in case step (d) starts with time segment $S_{inc}$ or equal to $T_{dec}(0)$ in case step (d) starts with time segment $S_{dec}$.

Preferably, step (b), if present, or step (c), if step (b) is not present, is preceded by the following step

(a) prepolymerising the olefin polymerization catalyst with propylene and optionally one or more comonomer(s)

Preferably, in step (a), if present, propylene and the same comonomer(s) as in step (c) are fed to the reactor.

Preferably, the comonomers used for the production of the propylene/alpha-olefin copolymer may be selected from ethylene and/or $C_4$- to $C_{20}$-alpha-olefins, more preferably from ethylene and/or $C_4$- to $C_{15}$-alpha-olefins, even more preferably from ethylene and/or $C_4$- to $C_{10}$-alpha-olefins, even more preferably selected from ethylene, 1-butene, 1-hexene, 1-octene, and most preferably the alpha-olefin is ethylene.

For technical and economical reasons usually not more than five different comonomers are fed to the reactor during the process.

Preferably, the time of one variation period ($P_T$) is at least 4.0 h, more preferably is at least 6.0 h, even more preferably is at least 8.0 h and most preferably is at least 10.0 h.

Further, preferably, the time of one variation period ($P_T$) is not more than 50 h, more preferably is not more than 40 h, even more preferably is not more than 30 h, even more preferably is not more than 25 h and most preferably is not more than 20 h.

Preferably, the average residence time ($\tau$) [(tau)] is at least 0.25 hours, more preferably is at least 0.50 hours, even more preferably is at least 0.75 hours even more preferably is at least 1.0 hour and most preferably is at least 1.25 hours.

Further, preferably, the average residence time ($\tau$) [(tau)] is not more than 3.0 hours, more preferably is not more than 2.5 hours, even more preferably is not more than 2.0 hours and most preferably is not more than 1.75 hours.

Preferably, the ratio $P_T/\tau$ [$P_T$/tau] is at least 3.0, even more preferably is at least 4.0, even more preferably is at least 5.0, even more preferably is at least 6.0 and most preferably at least 7.0.

Preferably, the ratio $P_T/\tau$ [$P_T$/tau] is not more than 50, more preferably is not more than 35, even more preferably is not more than 25, even more preferably is not more than 20, and most preferably is not more than 18.

In case each variation period consist of time segments $S_{inc}$, $S_{dec}$ and $S_{const}$, the time of one variation period ($P_T$) is defined as

$$P_T = I(S_{inc}) + I(S_{dec}) + I(S_{const})$$

In case each variation period consist of time segments $S_{inc}$ and $S_{dec}$ the time of one variation period ($P_T$) is defined as

$$P_T = I(S_{inc}) + I(S_{dec})$$

Preferably, $I(S_{inc})$ is at least is at least 2.0 hours, more preferably is at least 3.0 hours, more preferably is at least 4.0 hours and most preferably is at least 5.0 hours.

Further, preferably, $I(S_{inc})$ is not more than 20 hours, more preferably is not more than 15 hours, more preferably is not more than 12.5 hours and most preferably is not more than 10 hours.

Preferably, $I(S_{dec})$ is at least is at least 2.0 hours, more preferably is at least 3.0 hours, more preferably is at least 4.0 hours and most preferably is at least 5.0 hours.

Further, preferably, $l(S_{dec})$ is not more than 20 hours, more preferably is not more than 15 hours, more preferably is not more than 12.5 hours and most preferably is not more than 10 hours.

In the following, preferred ways of carrying out the process according to the first, second and third embodiment are described.

Preferably, step (b), if present, is carried out for not more than 5 hours, more preferably not more than 4 hours, even more preferably for not more than 3 hours and most preferably for not more than 2.5 hours.

Preferably, process steps (c), (d) and (b), if present, are carried out at a pressure of at least 10 bar, more preferably of at least 20 bar and most preferably of at least 30 bar;

Further, preferably, process steps (c), (d) and (b), if present, are carried out at a pressure of not more than 100 bar, more preferably of not more than 80 bar and most preferably of not more than 50 bar;

Preferably, in step (a), if present, the average residence time of the polymer as calculated from flow rate and volume as described for $\tau$ [tau] above is at least 2.0 min, more preferably at least 4.0 min and most preferably at least 6.0 min.

In step (a), if present, the average residence time of the polymer as calculated from flow rate and volume as described for $\tau$ [tau] above is preferably not more than 15.0 min, more preferably is not more than 12.0 min and most preferably is not more than 9.0 min.

Preferably, step (a), if present, is carried out at temperature of at least 5 °C, more preferably of at least 10 °C and most preferably of at least 15 °C.

Step (a), if present, is preferably carried out at temperature of not more than 50 °C, more preferably of not more than 35 °C and most preferably of not more than 25 °C.

In case the process is carried out in more than one reactor, the process steps (c), (d), (e) and (b), if present, may be carried out in each of said reactors. Usually, for a cost-efficiency, the process according to the first embodiment is carried out in not more than three reactors, more preferably not more than two reactors and most preferably the variation is carried out in one reactor only.

Usually, in the process not more than five reactors are used, more preferably not more than three reactors and most preferably not more than two reactors are used.

The withdrawal of the polymer from said one reactor may be carried out continuously and/or batchwise, preferably continuously.

Preferably in the processes according to the invention, the produced polymers are continuously withdrawn from said reactor during step (d).

Preferably, in the processes according to the invention, the polyolefin is subjected to not more than one variation period in said one reactor.

Preferably, the polymer withdrawn in each variation period is routed to a different vessel compared with the previous variation period. Said vessel is preferably a powder silo in which the powder is collected and stored under a non-oxidizing atmosphere, preferably under nitrogen.

Preferably the polymer obtained from each full variation period is homogenized.

The homogenization of the withdrawn polymer may be carried out in a homogenization unit preferably the polymer from two or more powder silos is blended. Most preferably the blending is carried out in the compounding unit.

The olefin polymerization catalyst in step d) is preferably a Ziegler-Natta catalyst as described above.

If the inventive process according to the first embodiment is combined with further conventional stages carried out in additional reactors, such catalysts are typically introduced into the first reactor only. The components of the catalyst can be fed into the reactor separately or simultaneously or the components of the catalyst system can be precontacted prior to the reactor.

Such pre-contacting can also include a catalyst pre-polymerization prior to feeding into the polymerization reactor. In the pre-polymerization, the catalyst components are contacted for a short period with a monomer before feeding to the reactor.

Moreover, the propylene homo- or copolymer of the invention may further contain various additives, such as, antioxidants and UV-stabilizers, which can be added to the propylene homo- or copolymer in an amount of up to 2.0 wt%, preferably up to 1.5 wt% and most preferably, below 1.0 wt.% based on the total propylene homo- or copolymer.

Fig. 1 a) to Fig. 1 c) show non-limiting examples for $S_{inc}$.according to the first embodiment.

Fig. 1 d) to Fig. 1 f) show non-limiting examples for $S_{dec}$.according to the first embodiment.

Fig. 2a) and 2b) show non-limiting examples for a variation period comprising time segment $S_{const}$ between time segment $S_{inc}$ and time segment $S_{dec}$ according to the first embodiment.

Fig. 3) shows a non-limiting example of a process comprising optional step b) according to the first embodiment before the variation is carried out.

Fig. 4 a) to Fig. 4 c) show non-limiting examples for $S_{inc}$ according to the second embodiment which does not fall under the scope of the present invention.

Fig. 4 d) to Fig. 4 f) show non-limiting examples for $S_{dec}$.according to the second embodiment which does not fall under the scope of the present invention.

Fig. 5a) and 5b) show non-limiting examples for a variation period comprising time segment $S_{const}$ between time segment $S_{inc}$ and time segment $S_{dec}$ according to the second embodiment which does not fall under the scope of the present invention.

Fig. 6) shows a non-limiting example of a process comprising optional step b) according to the second embodiment, which does not fall under the scope of the present invention, before the variation is carried out.

Fig. 7d) to Fig. 7f) show non-limiting examples for $S_{dec}$.according to the third embodiment which does not fall under the scope of the present invention.

Fig. 8a) and 8b) show non-limiting examples for a variation period comprising time segment $S_{const}$ between time segment $S_{inc}$ and time segment $S_{dec}$ according to the third embodiment which does not fall under the scope of the present invention.

Fig. 9) shows a non-limiting example of a process comprising optional step b) according to the third embodiment, which does not fall under the scope of the present invention, before the variation is carried out.

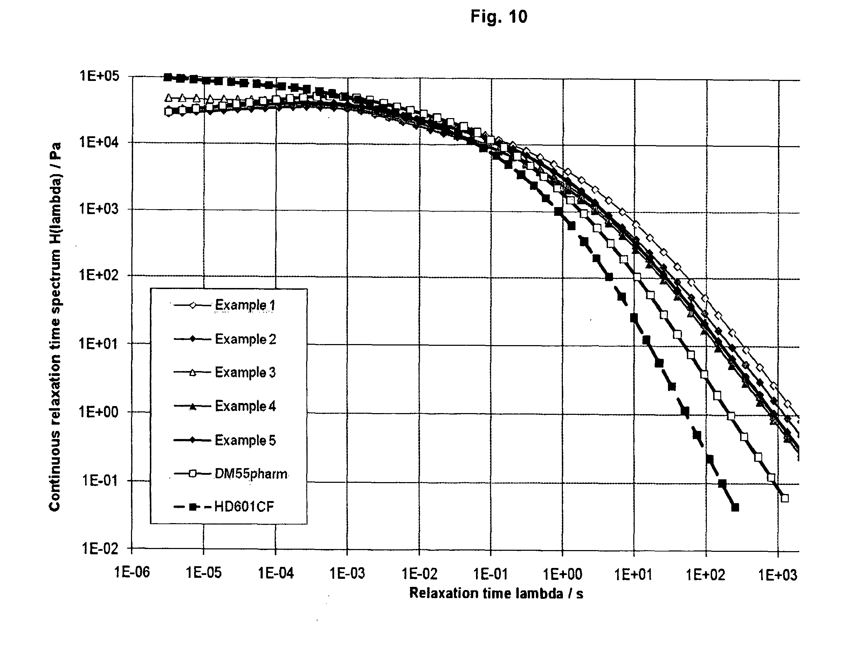

Fig 10 shows the terminal relaxation time $\lambda_T$ [lambda$_T$] of the propylene homo- or copolymer used in the examples calculated at a relaxation strength $H(\lambda)$ [H(lambda)] of 0.1 Pa.

In the following the present invention is further illustrated by means of non-limiting examples.

**Examples**

Definition of the test methods:

The test specimen for the measurement of the tensile modulus, charpy notch impact strength, tensile properties, heat deflection temperature and shrinkage of the propylene homo- or copolymer is consisting of 99.85 wt.% of the propylene homo- or copolymer and as usual additives 0.05 wt.% Tris(2,4-di-*tert*-butylphenyl)phosphite), 0.05 wt.% Pentaerythritol Tetrakis(3-(3,5-di-*tert*-butyl-4-hydroxyphenyl)propionate (Irganox B225 distributed by Ciba Specialty chemicals) and 0.05 wt.% Ca-Stearate ("SP" distributed by Faci).

Additives, like the above-mentioned, are routinely employed to stabilize polypropylenes. Without such additives the polypropylene would deteriorate during further processing. E.g. when preparing test specimen the polypropylene would deteriorate, leading to incorrect results.

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Charpy notched impact test

Charpy impact strength was determined according to ISO 179-1eA:2000 on V-notched samples of 80x10x4 $mm^3$ at +23 °C. The test specimens were prepared by injection moulding in line with ISO 1873-2.

c) Tensile test

Tensile tests are performed according to ISO 527-2 at +23 °C on injection molded specimen (type 1B, 4 mm thickness) prepared by injection moulding in line with ISO 1873-2.

The tensile modulus (E-modulus) was calculated from the linear part of said tensile test results, conducting that part of the measurement with an elongation rate of 5 mm/min.

For determining tensile stress at yield (in MPa), tensile strain at yield (in %), tensile strength (in MPa), tensile strain at tensile strength (in %), tensile stress at break (in MPa) and tensile strain at break (in %) the aforementioned tensile test according to ISO 527-2 at +23 °C was continued with an elongation rate of 50 mm/min until the specimen broke.

d) Density

Density of the polymer was measured according to ISO 1183/D on compression moulded specimens.

e) NMR-spectroscopy measurements:

The $^{13}$C-NMR spectra of polypropylenes were recorded on Bruker 400 MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988) and Chujo R, et al, Polymer 35 339 (1994). The NMR-measurement was used for determining the mmmm pentad concentration in a manner well known in the art.

f) complex viscosity and zero shear viscosity

Dynamic rheological measurements were carried out with an Anton Paar MCR501 rheometer on compression molded samples under nitrogen atmosphere at 230 °C using 25 mm diameter plate and plate geometry. A range of frequency ($\omega$) [(omega)] from 10-2 to $5.10^2$ was covered in the measurement. The complex viscosity, $\eta^*(\omega)$ [eta*(omega)], was calculated from the storage and loss moduli G',G"($\omega$) [G', G"(omega)] as

$$\eta^*(\omega) = (G'(\omega)^2 + G''(\omega)^2)^{1/2} / \omega$$

$$[eta^*(omega) = (G'(omega)^2 + G''(omega)^2)^{1/2} / omega]$$

For calculating the zero shear viscosity, validity of the Cox/Merz relation

$$\eta\,(\gamma') = \eta^*(\omega) \text{ for } \gamma = \omega$$

$$[eta(gamma') = eta^*(omega) \text{ for } gamma = omega]$$

with $\gamma'$ [gamma'] being the shear rate was assumed. The zero shear viscosity, $\eta_0$ [eta$_0$], was then determined from the lower limit of the viscosity curve $\eta\,(\gamma')$ [eta(gamma')].

g) Weight average molecular weight

The weight average molecular weight ($M_w$) was calculated from the zero shear viscosity ($\eta_0$) [eta$_0$] as resulting from a Cox-Merz conversion of the complex viscosity, and with the help of a calibration curve established in Grein et al. Rheol.Acta 46 (2007) 1083-1089.

h) Polydispersity index (PI):

Dynamic rheological measurements were carried out with an Anton Paar MCR501 rheometer on compression molded samples under nitrogen atmosphere at 230 °C using 25 mm diameter plate and plate geometry. The oscillatory shear experiments were done within the linear viscoelastic range of strain at frequencies from 0.01 to 500 rad/s in line with ISO 6721-1.

The values of storage modulus (G'), loss modulus (G"), complex modulus (G*) and complex viscosity ($\eta^*$) [(eta*)] were obtained as a function of frequency ($\omega$) [(omega)]. The polydispersity index,

$$PI = 10^5/G_c,$$

is calculated from cross-over point of G'($\omega$) [G'(omega)] and G"($\omega$) [G"(omega)] at 230°C, for which

$$G'(\omega_c) = G''(\omega_c) = G_c \qquad [G'(omega_c) = G''(omega_c) = G_c]$$

holds.

j) Weight average molecular weight and molecular weight distribution by GPC measurements (comparative examples 6, 7 and 8 only)

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/l 2,6-Di-*tert*-butyl-4-methyl-phenol) as solvent at 145 °C and at a constant flow rate of 1 ml/min. 216.5 microliter of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

k) Terminal relaxation time $\lambda_T$ [lambda$_T$]

To further determine the content of high molecular weight components decisive for crystallization and stiffness of the polymers and compositions based on the same, a terminal relaxation time ($\lambda_T$) [(lambda$_T$)] was calculated. For this, a continuous relaxation time spectrum H($\lambda$) [H(lambda)] was calculated from the storage and loss modulus data (G',G"($\omega$)) [(G',G"(omega))] using the Rheoplus 123 Software V 2.66 of Anton Paar KG. The underlying calculation principles are for example described in T. Mezger, The Rheology Handbook, Vincentz Network 2006, pages 109-113. A bandwidth of 1% was set and 50 values of relaxation time $\lambda$ [lambda] pre-determined, using an automatic limit selection. The regularization parameter $\alpha$ was set at 0.01 and a cubic spline was used for smoothing. For characterizing the longest molecules present, a terminal relaxation time $\lambda_T$ [lambda$_T$] was calculated at a relaxation strength H($\lambda$) [H(lambda)] of 0.1 Pa.

l) Heat Deflection Temperature (HDT):

The HDT was determined on injection molded test specimens of 80x10x4 mm$^3$ prepared according to ISO ISO 1873-2 and stored at +23°C for at least 96 hours prior to measurement. The test was performed on flatwise supported specimens according to ISO 75, condition A, with a nominal surface stress of 1.80 MPa.

m) Differential Scanning Calorimetry (DSC):

DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

n) Ethylene content:

The relative amount of $C_2$ in the polymer (only for polymer 4) was measured with Fourier transform infrared spectroscopy (FTIR). When measuring the ethylene content in polypropylene, a thin film of the sample (thickness about 250 mm) was prepared by hot-pressing. The area of - $CH_2$- absorption peak (800-650 cm$^{-1}$) was measured with Perkin Elmer FTIR 1600 spectrometer. The method was calibrated by ethylene content data measured by $^{13}$C-NMR.

o) Shrinkage:

The shrinkage was measured on injection molded rectangular plates of 150 x 80 x 2 mm$^3$ filled with a triangular distributor and a 0.5 mm thick film gate along the shorter side. A melt temperature of 260°C, a mold temperature of 60°C and an injection speed at the gate of 100 mm/s were used for producing the specimens which were cut free from the distributor immediately after demolding. The specimens were then stored at +23°C for 14 days and the relative shrinkage against the mold dimension was determined in both longitudinal (flow) and transversal direction, measuring in the center of the specimen in each case. 10 specimens were tested for determining average values, and the difference was calculated from the averages.

p) Particle size (filler before compounding)

The particle sizes d50 and d95 are calculated from the particle size distribution measured by laser diffraction according to ISO 13320-1:1999.

q) Specific surface of filler

The specific surface (BET) is determined according to DIN 66131/2.

r) Average aspect ratio of filler

The average aspect ratio has been determined by recording transmission electron microscopy (TEM) images of the pure inorganic filler prepared onto film-coated TEM grids from an aqueous suspension by rotating the sample in 1° intervals from -75° to +75° , e.g. with JEOL JEM-2100 microscope, and reconstructing the three dimensional structure (e.g. with the JEOL TEMography™ software). 100 particles were measured and the average calculated. The aspect ratio of a particle is the ratio of the longest and shortest particle radii that pass through the geometric centre of the particle.
In case of anisotropy in one dimension (fiber-like) or two dimensions (platelet-like) structures the geometric center equals the center of gravity of the particle.
In the following examples the hydrogen concentration in the reactor has been determined via on-line gas chromatography.

Polymers

Example 1: The experimental polypropylene homopolymer has been produced in a Borstar PP pilot plant as follows:
The catalyst has been prepared as defined in EP 0 491 566 A2; EP 0 591 224 B1 or EP 0 586 390 B1.
(Ti = 1.9 wt.-%), dicyclopentyl dimethoxy silane (DCPDMS) was used as donor and triethyl-aluminium (TEA) as cocatalyst with a $TEA/C_3$ ratio [g/kg] of 0.20 and a TEA/donor ratio [wt%/wt%] of 5. The catalyst was fed in paste form at a concentration of 100 g/l in a mixture of 70 vol% paraffin oil and 30 vol% vaseline fat, prepolymerized in liquid propylene at 20 °C in a stirred prepolymerization reactor having an average residence time of 7 minutes. The actual polymerization was carried out in a single loop reactor at a temperature of 62 °C and a pressure of 3400 kPa, starting by feeding propylene at a rate of 70 kg/h with 80 ppm of hydrogen ($c_0$), corresponding to an $MFR_2$ of 0.1 g/10min, for which a loop density of 520 $kg/m^3$ was adjusted (corresponding to an average residence time $\tau$ [tau] of 1.5 h) before starting the variation period. At to = 0 the polymer collection was started. Beginning 2 hours after to the hydrogen concentration in the reactor was increased linearly over time by adjusting the hydrogen concentration of the hydrogen/monomer feed in such a way that a maximum concentration ($c_{max}$) of 10000 ppm (corresponding to an $MFR_2$ of 80 g/min) was reached in the reactor 9 hours after to, and the hydrogen concentration of the hydrogen/monomer feed was reduced back to 80 ppm ($T_I$ = 7 h). The polymerization was continued and within a time of 9 h the original hydrogen concentration of 80 ppm in the reactor could be reached ($T_R$ = 9 h), meaning that the time of one variation period $P_H$ was 16 h and the ratio between $P_H$ and $\tau$ [tau] was 10.67.
Following deactivation of the catalyst with steam and drying of the resulting polymer powder with warm nitrogen, the resulting 500 kg of polymer were transferred to a powder mixing silo and homogenized, then the resulting polypropylene homopolymer was compounded together with 0.07 wt. % Calcium Stearate (SP distributed by Faci) and 0.60 wt. % Irganox B225 (antioxidant combination supplied by Ciba Specialty Chemicals) in a twin screw extruder at 270 to 300 °C. An $MFR_2$ value of 1.2 g/10min, a PI value of 7.3 $Pa^{-1}$ and a weight average molecular weight ($M_w$) of 679 kg/mol were determined for this polymer.
Example 2: The process was carried out as in example 1, except that the increase of the hydrogen concentration in the reactor was started immediately at to = 0 ($T_I$ = 9 h) but all other parameters were kept constant. This means that the time of one variation period $P_H$ was 18 h and the ratio between $P_H$ and $\tau$ was 12. An $MFR_2$ value of 2.3 g/10min, a PI value of 8.6 $Pa^{-1}$ and a weight average molecular weight ($M_w$) of 607 kg/mol were determined for this polymer.
Example 3: The process was carried out as in example 1, except that the increase of the hydrogen concentration in the reactor was started immediately at to = 0 and setting the maximum hydrogen concentration $c_{max}$ to 8000 ppm to be reached after 6 hours ($T_I$ = 6 h) while keeping all other parameters constant; the initial hydrogen concentration in the reactor ($c_0$) could be reached after 6 hours here ($T_I$ = 6 h). This means that the time of one variation period $P_H$ was 12 h and the ratio between $P_H$ and $\tau$ [tau] was 8. An $MFR_2$ value of 2.3 g/10min, a PI value of 7.0 $Pa^{-1}$ and a weight average molecular weight ($M_w$) of 586 kg/mol were determined for this polymer.
Example 4: The process was carried out as in example 1, except that the increase of the hydrogen concentration in the reactor was started immediately at to = 0 and setting the maximum hydrogen concentration $c_{max}$ to 6500 ppm to be reached after 4 hours ($T_I$ = 4 h) while keeping all other parameters constant; the initial concentration $c_0$ could be reached after 4 hours in the reactor here ($T_I$ = 4 h). This means that t the time of one variation period $P_H$ was again 8 h and the ratio between $P_H$ and $\tau$ [tau] was 5.33. An $MFR_2$ value of 2.6 g/10min, a PI value of 6.6 $Pa^{-1}$ and a weight

average molecular weight ($M_w$) of 559 kg/mol were determined for this polymer.

Example 5: The experimental polypropylene copolymer has been produced in a Borstar PP pilot plant as follows:

The catalyst has been prepared as defined in EP 0 491 566 A2; EP 0 591 224 B1 or EP 0 586 390 B1

(Ti = 1.9 wt.-%), dicyclopentyl dimethoxy silane (DCPDMS) was used as donor and triethyl-aluminium (TEA) as cocatalyst with a TEA/$C_3$ ratio [g/kg] of 0.20 and a TEA/donor ratio [wt%/wt%] of 5.

The catalyst was fed in paste form at a concentration of 100 g/l in a mixture of 70 vol% paraffin oil and 30 vol% vaseline fat, prepolymerized in liquid propylene at 20°C in a stirred prepolymerization reactor having an average residence time of 7 minutes. The first step of the polymerization was carried out in a single loop reactor at a temperature of 62°C and a pressure of 3400 kPa, starting by feeding propylene with 80 ppm of hydrogen ($c_0$), for which a loop density of 520 kg/m³ was adjusted before starting the variation period. At a certain time to = 0 the polymer collection was started and the hydrogen concentration of the hydrogen/monomer feed was increased linearly over time in such a way that a final hydrogen concentration in the reactor of 8000 ppm (corresponding to an $MFR_2$ of 80 g/min) was reached 1.5 hours after to, at which time the polymer was transferred to a gas phase reactor and the hydrogen feed was maintained constant (for calculation purposes, $T_I$ = 1,5 h and $T_R$ = 6 h are assumed, meaning that the time of one variation period $P_H$ was 7.5 h and the ratio between $P_H$ and $\tau$ [tau] was 5). The second step of the polymerization was carried out in a gas phase reactor with stirred bed and pure propylene feed (no additional hydrogen) at 60°C and 1500 kPa without, the third step in a second gas phase reactor with stirred bed and pure ethylene feed with 80 ppm hydrogen at 60°C and 1500 kPa.

Following deactivation of the catalyst with steam and drying of the resulting polymer powder with warm nitrogen, the resulting 500 kg of polymer were transferred to a powder mixing silo and homogenized, then the resulting polypropylene homopolymer was compounded together with 0.07 wt% Calcium Stearate (SP distributed by Faci) and 0.60 % Irganox B225 (antioxidant combination supplied by Ciba Specialty Chemicals) in a twin screw extruder at 270 to 300 °C. An $MFR_2$ value of 1.3 g/10min, a PI value of 5.9 Pa$^{-1}$, a weight average molecular weight of 596 kg/mol and an ethylene content of 1.8 wt% were determined for this polymer.

Comparative example 6: This is a polypropylene homopolymer (HD601 CF) commercially available from Borealis, having an $MFR_2$ of 8 g/10 min, a density of 905 kg/m³ and a melting point of 165°C.

Comparative example 7: This is a polypropylene homopolymer (HF700SA) commercially available from Borealis, having an $MFR_2$ of 20 g/10 min, a density of 905 kg/m³ and a melting point of 164°C.

Comparative example 8: This is a polypropylene homopolymer (DM55 pharm) commercially available from Borealis, having an $MFR_2$ of 2,8 g/10 min, a density of 905 kg/m³ and a melting point of 163°C.

The process conditions and properties of the used polymers are summarized in the following table 1.

The resulting continuous relaxation time spectra $H(\lambda)$ [H(lambda)] of inventive and comparative polymers are presented in figure 10 For characterizing the longest molecules present, a terminal relaxation time $\lambda_T$ [lambda$_T$] was calculated at a relaxation strength $H(\lambda)$ [H(lambda)] of 0.1 Pa. Said results are also given in table 1 below.

In a comparative test the propylene homo- and copolymers 1 to 3 and 5 have been alpha-nucleated by melt mixing with 0.2 wt% of Adekastab NA-11 UH (distributed by Adeka Palmarole). These alpha-nucleated polymers are denominated comparative compositions 1B, 2B, 3B and 5B in table 1. As shown in table 2 below, the tensile modulus increased but the impact strength in a Charpy notched impact test according to ISO 179/1eA:2000 is decreased.

| table 1 | | 1 | 2 | 3 | 4 | 5 | 6 | 7 | 8 |
|---|---|---|---|---|---|---|---|---|---|
| initial $H_2$-feed | [ppm] | 80 | 80 | 80 | 80 | 80 | n.a. | n.a. | n.a. |
| maximum $H_2$-feed | [ppm] | 10,000 | 10,000 | 8,000 | 6,500 | 8,000 | n.a. | n.a. | n.a. |
| average residence time $\tau$ | [h] | 1.5 | 1.5 | 1.5 | 1.5 | 1.5 | n.a. | n.a. | n.a. |
| increase period $T_I$ | [h] | 7 | 9 | 6 | 4 | 1.5 | n.a. | n.a. | n.a. |
| reduction period $T_R$ | [h] | 9 | 9 | 6 | 4 | 6 | n.a. | n.a. | n.a. |
| $P_H$ | [h] | 16 | 18 | 12 | 8 | 7.5 | n.a. | n.a. | n.a. |
| $P_H/\tau$ [P/tau] | --- | 10.67 | 12 | 8 | 5.33 | 5 | n.a. | n.a. | n.a. |
| $MFR_2$ (230°C, 2.16 kg) powder | g/10 min | 3.9 | 10.9 | 7.1 | 5.0 | 4.4 | 8.0 | n.d. | 2.8 |
| $MFR_2$ (230°C, 2.16 kg) pellet | [g/10 min] | 1.2 | 2.3 | 2.3 | 2.6 | 1.3 | 8.0 | 20 | 2.8 |
| Polydispersity index (PI) | [Pa$^{-1}$] | 7.3 | 8.6 | 7.0 | 6.6 | 5.9 | 3.5 | 2.8 | 3.3 |
| $M_w$ | [kg/mol] | 679 | 607 | 586 | 559 | 596 | 367 | 260 | 540 |
| tensile modulus | MPa | 1833 | 1852 | 1844 | 1808 | 1837 | 1420 | 1500 | 1350 |
| tensile stress at yield | MPa | 38 | 38 | 38 | 37 | 38 | 32.0 | 34.0 | 29 |
| tensile strain at yield | % | 8 | 8 | 8 | 8 | 8 | n.d. | 8.0 | 9.0 |
| tensile strength | MPa | 38 | 38 | 38 | 37 | 38 | n.d. | n.d. | n.d. |

(continued)

| table 1 | | 1 | 2 | 3 | 4 | 5 | 6 | 7 | 8 |
|---|---|---|---|---|---|---|---|---|---|
| tensile strain at tensile strength | % | 8 | 8 | 8 | 8 | 8 | n.d. | n.d. | n.d. |
| tensile stress at break | MPa | 15 | 17 | 17 | 16 | 15 | n.d. | n.d. | n.d. |
| tensile strain at break | % | 115 | 90 | 110 | 140 | 109 | n.d. | n.d. | n.d. |
| Charpy notched impact strength 23°C | kJ/m$^2$ | 5 | 4 | 4 | 4 | 6 | 3.8 | 3.5 | 4.1 |
| $\lambda_T$ at H($\lambda$) = 0.1 Pa [lambda$_T$ at H(lambda) = 0.1 Pa] | s | 10800 | 7220 | 4610 | 4450 | 4730 | 165 | 95 | 950 |
| n.d. not determined; n.a. not applicable | | | | | | | | | |

table 2

| comparative composition (alpha-nucleated) | | 1B | 2B | 3B | 5B |
|---|---|---|---|---|---|
| tensile modulus | MPa | 2287 | 2277 | 2247 | 2271 |
| tensile stress at yield | MPa | 42 | 42 | 42 | 42 |
| tensile strain at yield | % | 6 | 6 | 6 | 6 |
| tensile strength | MPa | 42 | 42 | 42 | 42 |
| tensile strain at tensile strength | % | 6 | 6 | 6 | 6 |
| tensile stress at break | MPa | 12 | 24 | 19 | 15 |
| tensile strain at break | % | 79 | 24 | 45 | 154 |
| impact strength 23°C | kJ/m$^2$ | 3 | 3 | 2 | 3 |
| Delta Tensile Modulus | MPa | 454 | 425 | 396 | 430 |
| Delta Impact | kJ/m$^2$ | -2 | -1 | -2 | -2 |

The compounding of the compositions was performed in a twin screw extruder with two high intensity mixing segments and at a temperature of 190 to 230 °C.

Comparative composition 6C and inventive compositions 1C, 2C, 3C and 5C were prepared by compounding 94.2 wt.% of the respective polymer with 5 wt.% talc (Jetfine 3CA, distributed by Luzenac), 0.1 wt.% Ca-stearat (SP distributed by Faci), 0.2 wt.% Irganox B225 (distributed by Ciba) and 0.5 glycerol monostearate (GMS, distributed by Faci).

Comparative composition 6D and inventive compositions 1 D, 2D, 3D and 5D were prepared by compounding 89.2 wt.% of the respective polymer with 10 wt.% talc (Jetfine 3CA, distributed by Luzenac), 0.1 wt.% Ca-stearat (SP distributed by Faci), 0.2 wt.% Irganox B225 (distributed by Ciba) and 0.5 glycerol monostearate (GMS, distributed by Faci).

Comparative composition 7E and inventive composition 3E was prepared by compounding 94.2 wt.% of polymer 3 with 5 wt.% talc (HAR T84, distributed by Luzenac), 0.1 wt.% Ca-stearat (SP distributed by Faci), 0.2 wt.% Irganox B225 (distributed by Ciba) and 0.5 glycerol monostearate (GMS, distributed by Faci).

Comparative composition 7F and inventive compositions 3F was prepared by compounding 89.2 wt.% of polymer 3 with 10 wt.% talc (HAR T84, distributed by Luzenac), 0.1 wt.% Ca-stearat (SP distributed by Faci), 0.2 wt.% Irganox B225 (distributed by Ciba) and 0.5 glycerol monostearate (GMS, distributed by Faci).

Irganox B225 is a blend of 50 % Irgafos 168 (Tris(2,4-di-*tert*-butylphenyl)phosphite)) and 50 % Irganox 1010 (Pentaerythritol Tetrakis(3-(3,5-di-*tert*-butyl-4-hydroxyphenyl)propionate) distributed by Ciba Specialty Chemicals.

Jetfine 3CA, distributed by Luzenac, is talc having

- a screen residue (Alpine Airjet) of 0.03 % of particles > 15 $\mu$m

- a d50 value of 1.0 $\mu$m and a d95 value of 3.3 $\mu$m, both calculated from the particle size distribution measured by laser diffraction according to ISO 13320-1:1999.

- a specific surface area measured according to DIN 66131/2 of 14.5 m$^2$/g

- a specific gravity determined according to ISO 787/10 of 2.78 g/cm$^3$

- a hardness on the Mohs' scale of 1

- a moisture content determined according to ISO 787/2 of ≤ 0.3 %

- an average aspect ratio of 9.5

HAR T84, distributed by Luzenac, is a talc having

- a d50 value of 2 $\mu$m and a d95 value of 10 $\mu$m, both calculated from the particle size distribution measured by laser diffraction according to ISO 13320-1:1999.

- a specific surface area measured according to DIN 66131/2 of 16 $m^2$/g

- a specific gravity determined according to ISO 787/10 of 2.78 g/$cm^3$

- a hardness on the Mohs' scale of 1

- a moisture content determined according to ISO 787/2 of s 0.3 %

- an average aspect ratio of 14.5

The results are shown in table 2A and 2B below.

| table 2A | | inventive compositions | | | | | | |
|---|---|---|---|---|---|---|---|---|
| | | 1C | 1D | 2C | 2D | 3C | 3D | 3E |
| MFR$_2$ (230°C, 2.16 kg) | [g/10min] | 1.2 | 1.28 | 2.97 | 3.12 | 2.76 | 2.67 | 2.69 |
| **Crystallization** | | | | | | | | |
| Melting temperature | [°C ] | 166.1 | 167 | 165.8 | 166.7 | 167 | 166.4 | 165.9 |
| heat of fusion | [J/g ] | 106.9 | 102.3 | 108 | 102.4 | 103.9 | 100.8 | 107.2 |
| crystallization temperature | [°C ] | 127.3 | 127.6 | 127.6 | 127.9 | 126.6 | 127.9 | 126.2 |
| heat of crystallization | [J/g] | 103.1 | 94.5 | 103.9 | 94.8 | 103.2 | 93.6 | 103.6 |
| **Tensile test** | | | | | | | | |
| tensile modulus | [MPa] | 2404.1 | 2757.2 | 2440.4 | 2815 | 2367.5 | 2765.5 | 2428.8 |
| tesnsile stress at yield | [MPa] | 40.1 | 40.2 | 40.1 | 40.3 | 39.8 | 39.9 | 39.3 |
| tensile strain at yield | [%] | 6 | 5.3 | 5.6 | 5 | 6 | 5.3 | 5.7 |
| tensile strength | [MPa] | 40.1 | 40.2 | 40.1 | 40.3 | 39.8 | 39.9 | 39.3 |
| tensile strain at tensile strength | [%] | 5.98 | 5.3 | 5.64 | 4.98 | 5.98 | 5.32 | 5.69 |
| tensile stress at break | [MPa] | 4.4 | 4.1 | 22 | 14.7 | 8.3 | 5.4 | 6.8 |
| tensile strain at break | [%] | 80.6 | 50.17 | 18.72 | 20.75 | 49.67 | 39.26 | 36.25 |
| **Charpy impact test** | | | | | | | | |
| 23°C | [kJ/$m^2$] | 7.5 | 6.1 | 4.3 | 4 | 5 | 4.2 | 5.4 |
| **HDT** | | | | | | | | |
| Temperature | [°C] | 59 | 61.6 | 59 | 62 | 58.4 | 61.4 | 58.4 |
| **Shrinkage** | | | | | | | | |
| longitudinal | [%] | 1.989 | 1.84 | 1.664 | 1.571 | 1.701 | 1.602 | 1.699 |
| transversal | [%] | 1.272 | 1.228 | 1.192 | 1.154 | 1.176 | 1.165 | 1.199 |
| Δ(longitudinal-transversal) | [%] | 0.717 | 0.612 | 0.472 | 0.417 | 0.525 | 0.437 | 0.5 |

| table 2B | | inventive compositions | | | comparative compositions | | | |
|---|---|---|---|---|---|---|---|---|
| | | 3F | 5C | 5D | **6C** HD601CF | **6D** HD601CF | **7E** HF700SA | **7F** HF700SA |
| $MFR_2$ (230°C, 2.16 kg) | [g/10min] | 2.92 | 1.29 | 1.45 | 7.64 | 8.1 | 23.41 | 24.7 |
| **Crystallization** | | | | | | | | |
| Melting temperature | [°C] | 166.6 | 166.5 | 167.1 | 165.2 | 165.4 | 164.5 | 165.1 |
| heat of fusion | [J/g] | 101.4 | 105.1 | 98.8 | 103.8 | 96.3 | 103.4 | 97.5 |
| crystallization temperature | [°C] | 126.9 | 127 | 127.6 | 126.1 | 127.2 | 126.2 | 127.6 |
| heat of crystallization | [J/g] | 92.6 | 102.7 | 92.6 | 102.1 | 90.3 | 102.7 | 91.3 |
| **Tensile test** | | | | | | | | |
| tensile modulus | [MPa] | 2903.5 | 2427.9 | 2771.5 | 2096.8 | 2493.9 | 2044.3 | 2353.5 |
| tensile stress at yield | [MPa] | 40.1 | 40 | 40.2 | 37.5 | 37.8 | 36.5 | 36.7 |
| tensile strain at yield | [%] | 5 | 6 | 5.3 | 6.6 | 5.7 | 7.2 | 6.1 |
| tensile strength | [MPa] | 40.1 | 40 | 40.2 | 37.5 | 37.8 | 36.5 | 36.7 |
| tensile strain at tensile strength | [%] | 5.02 | 5.97 | 5.32 | 6.57 | 5.74 | 7.17 | 6.1 |
| tensile stress at break | [MPa] | 16.6 | 4.2 | 4.3 | 8.2 | 6.1 | 9.7 | 18.8 |
| tensile strain at break | [%] | 21.78 | 85.61 | 44.9 | 56.54 | 39.28 | 50.1 | 23.56 |
| **Charpy impact test** | | | | | | | | |
| 23°C | [kJ/m$^2$] | 4.4 | 7.4 | 5.7 | 3.7 | 3.7 | 2.7 | 2.3 |
| **HDT** | | | | | | | | |
| Temperature | [°C] | 62.6 | 58.9 | 63.5 | 55.6 | 58.7 | 55.4 | 57.3 |
| **Shrinkage** | | | | | | | | |
| longitudinal | [%] | 1.528 | 1.957 | 1.821 | 1.234 | 1.176 | 1.059 | 1.017 |
| transversal | [%] | 1.135 | 1.257 | 1.208 | 1.173 | 1.128 | 1.114 | 1.082 |
| Δ(longitudinal-transversal) | [%] | 0.393 | 0.7 | 0.613 | 0.061 | 0.048 | -0.055 | -0.065 |

**Claims**

1. A process for the production of a propylene homo- or copolymer in one or more reactors, wherein in at least one reactor the process comprises the following steps

   (c) feeding one or more (co)monomers and hydrogen to said at least one reactor, whereby the hydrogen concentration in said at least one reactor is periodically varied;
   (d) preparing an olefin homo- or copolymer in the presence of an olefin polymerization catalyst;
   (e) withdrawing the olefin homo- or copolymer from said at least one reactor

   whereby
   the following relation is fulfilled

$$\frac{P_H}{\tau} > 2.0$$

   wherein

   $P_H$ is the time of one variation period of the hydrogen concentration in said at least one reactor; and
   $\tau$ is the average residence time of the polymer in said at least one reactor.

2. The process according to claim 1 wherein the hydrogen concentration in said at least one reactor is varied within the range of 10 and 20000 ppm.

3. The process according to any of the claims 1 to 2 wherein the polyolefin is subjected to not more than one variation period in said at least one reactor.

4. The process according to any of the claims 1 to 3 wherein the average residence time ($\tau$) is from 0.25 hours to 3.0 hours in said at least one reactor.

5. The process according to any of the claims 1 to 4 wherein the time of one variation period (P) is from 4.0 h to 50 h in said at least one reactor.

6. The process according to any of the claims 1 to 5 wherein the olefin polymerization catalyst in step d) is a Ziegler-Natta catalyst.

7. The process according to any of the claims 1 to 6 wherein process steps (c), (d) are carried out at a temperature of 40 °C to 110 °C.

8. The process according to any of the claims 1 to 7 wherein step (c) is preceded by the following step

   (a) prepolymerising the olefin polymerization catalyst with one or more comonomer(s).

9. The process according to any of the claims 1 to 8 wherein the produced polymers are continuously withdrawn from said reactor during step (d).

10. The process according to any of the claims 1 to 9 wherein the periodical variation of the hydrogen concentration in said at least one reactor starts with an increase of the hydrogen concentration in said reactor.

**Patentansprüche**

1. Verfahren zur Herstellung eines Propylenhomo- oder Propylencopolymers in einem oder mehreren Reaktoren, wobei in mindestens einem Reaktor das Verfahren die folgenden Schritte umfasst

   (c) Zuführen von einem oder mehreren (Co)Monomeren und von Wasserstoff zu dem besagten mindestens einen Reaktor, wodurch die Wasserstoffkonzentration in dem besagten mindestens einen Reaktor periodisch verändert wird;

(d) Herstellen eines Olefinhomo- oder Olefincopolymers in der Anwesenheit von einem Olefinpolymerisationskatalysator;

(e) Abziehen des Olefinhomo- oder Olefincopolymers aus dem besagten mindestens einen Reaktor

wodurch
die folgende Beziehung

$$\frac{P_H}{\tau} > 2,0$$

erfüllt ist, wobei

$P_H$ die Zeit von einem Veränderungszeitraum für die Wasserstoffkonzentration in dem besagten mindestens einen Reaktor ist; und
$\tau$ die durchschnittliche Verweildauer des Polymers in dem besagten mindestens einen Reaktor ist.

2. Verfahren nach Anspruch 1, wobei die Wasserstoffkonzentration in dem besagten mindestens einen Reaktor innerhalb des Bereichs von 10 bis 20000 ppm verändert wird.

3. Verfahren nach einem der Ansprüche 1 bis 2, wobei das Polyolefin nicht mehr als einem Veränderungszeitraum in dem besagten mindestens einen Reaktor unterworfen wird.

4. Verfahren nach einem der Ansprüche 1 bis 3, wobei die durchschnittliche Verweildauer ($\tau$) von 0,25 Stunden bis 3,0 Stunden in dem besagten mindestens einen Reaktor ist.

5. Verfahren nach einem der Ansprüche 1 bis 4, wobei die Zeit von einem Veränderungszeitraum ($P$) von 4,0 h bis 50 h in dem besagten mindestens einen Reaktor ist.

6. Verfahren nach einem der Ansprüche 1 bis 5, wobei der Olefinpolymerisationskatalysator im Schritt d) ein Ziegler-Natta-Katalysator ist.

7. Verfahren nach einem der Ansprüche 1 bis 6, wobei die Verfahrensschritte (c) und (d) bei einer Temperatur von 40 °C bis 110 °C durchgeführt werden.

8. Verfahren nach einem der Ansprüche 1 bis 7, wobei dem Schritt (c) der folgende Schritt

(a) Vorpolymerisieren des Olefinpolymerisationskatalysators mit einem oder mehreren Comonomer(en)

vorausgeht.

9. Verfahren nach einem der Ansprüche 1 bis 8, wobei die hergestellten Polymere kontinuierlich aus dem besagten Reaktor während des Schritts (d) abgezogen werden.

10. Verfahren nach einem der Ansprüche 1 bis 9, wobei die periodische Veränderung der Wasserstoffkonzentration in dem besagten mindestens einen Reaktor mit einer Zunahme der Wasserstoffkonzentration in dem besagten Reaktor beginnt.

**Revendications**

1. Procédé destiné à la production d'un homopolymère ou d'un copolymère de propylène dans un ou plusieurs réacteurs, dans lequel, dans un réacteur au moins, le procédé comprend les étapes suivantes consistant à :

(c) fournir un ou plusieurs comonomères et de l'hydrogène dans ledit ou lesdits réacteurs, grâce à quoi la concentration en hydrogène dans ledit ou lesdits réacteurs varie de manière périodique ;

(d) préparer un homopolymère ou un copolymère d'oléfine en présence d'un catalyseur de polymérisation d'oléfine ;
(e) retirer l'homopolymère ou le copolymère d'oléfine dudit ou desdits réacteurs ;

grâce à quoi :

la relation suivante est satisfaite :

$$\frac{P_H}{\tau} > 2{,}0$$

dans laquelle :

$P_H$ représente la durée d'une période de variation de la concentration en hydrogène dans ledit ou lesdits réacteurs ; et
$\tau$ représente le temps de traitement moyen du polymère dans ledit ou lesdits réacteurs.

**2.** Procédé selon la revendication 1, dans lequel la concentration en hydrogène dans ledit ou lesdits réacteurs varie dans une plage comprise entre 10 ppm et 20 000 ppm.

**3.** Procédé selon la revendication 1 ou la revendication 2, dans lequel la polyoléfine est soumise à pas plus d'une période de variation dans ledit ou lesdits réacteurs.

**4.** Procédé selon l'une quelconque des revendications 1 à 3, dans lequel le temps de traitement moyen ($\tau$) est compris entre 0,25 heure et 3,0 heures dans ledit ou lesdits réacteurs.

**5.** Procédé selon l'une quelconque des revendications 1 à 4, dans lequel la durée d'une période de variation (P) est comprise entre 4,0 heures et 50 heures dans ledit ou lesdits réacteurs.

**6.** Procédé selon l'une quelconque des revendications 1 à 5, dans lequel le catalyseur de polymérisation d'oléfine dans l'étape (d) est un catalyseur Ziegler-Natta.

**7.** Procédé selon l'une quelconque des revendications 1 à 6, dans lequel les étapes du procédé (c) et (d) sont exécutées à une température comprise entre 40 °C et 110 °C.

**8.** Procédé selon l'une quelconque des revendications 1 à 7, dans lequel l'étape (c) est précédée par l'étape suivante consistant à :

(a) prépolymériser le catalyseur de polymérisation d'oléfine avec un ou plusieurs comonomères.

**9.** Procédé selon l'une quelconque des revendications 1 à 8, dans lequel les polymères produits sont retirés de manière continue dudit réacteur au cours de l'étape (d).

**10.** Procédé selon l'une quelconque des revendications 1 à 9, dans lequel la variation périodique de la concentration en hydrogène dans ledit ou lesdits réacteurs commence par une augmentation de la concentration en hydrogène dans ledit réacteur.

## Fig. 1a

## Fig. 1b

## Fig. 1c

## Fig. 1d

## Fig. 1e

## Fig. 1f

Fig. 2a

Fig. 2b

Fig. 3

## Fig. 4a

ratio

time

## Fig. 4b

ratio

time

## Fig. 4c

ratio

time

## Fig. 4d

## Fig. 4e

## Fig. 4f

## Fig. 5a

## Fig. 5b

# Fig. 6

Fig. 7a

Fig. 7b

Fig. 7c

## Fig. 7d

## Fig. 7e

## Fig. 7f

## Fig. 8a

## Fig. 8b

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19930594
- US 6156854 A
- WO 2008006586 A
- EP 591224 A
- EP 0491566 A2
- EP 0591224 B1
- EP 0586390 B1

### Non-patent literature cited in the description

- **GREIN et al.** *Rheol Acta,* 2007, 1083-1089
- Polypropylene Handbook. Hanser Publishers, 84
- **T. HAYASHI ; Y. INOUE ; R. CHÜJÖ ; T. ASAKU-RA.** *Polymer,* 1988, vol. 29, 138-43
- **CHUJO R et al.** *Polymer,* 1994, vol. 35, 339
- **GREIN et al.** *Rheol.Acta,* 2007, vol. 46, 1083-1089
- **T. MEZGER.** The Rheology Handbook. Vincentz Network, 2006, 109-113